# EUROPEAN PATENT APPLICATION

(11) **EP 1 252 955 A1**
(43) Date of publication of application: **30.10.2002**
(21) Application number: 02006675.9
(22) Date of filing: 26.03.2002
(51) Int. Cl.: B23C 5/10, B23C 5/20

(54) **Indexable insert**

(30) Priority: 26.04.2001 JP 2001130099; 24.07.2001 JP 2001222800; 24.07.2001 JP 2001222801; 24.07.2001 JP 2001222802; 25.07.2001 JP 2001224810
(71) Applicant: MITSUBISHI MATERIALS CORPORATION, Chiyoda-ku, Tokyo (JP)
(72) Inventor: Horiike, Nobukazu, Mitsubishi Materials Corp., Yuuki-gun, Ibaraki-ken (JP); Kitajima, Jun, Mitsubishi Materials Corp., Yuuki-gun, Ibaraki-ken (JP); Ikenaga, Kouichi, Mitsubishi Materials Corp., Yuuki-gun, Ibaraki-ken (JP); Ikenaga, Kouichi, Mitsubishi Materials Corp., Yuuki-gun, Ibaraki-ken (JP)
(74) Representative: HOFFMANN - EITLE

(57) **Abstract**

The present invention provides an indexable insert (10) which can pare away the chip stably without increase of cutting resistance. With this insert, serrations are formed by arranging a plurality of groove portions and ridge portions alternatingly upon side ridge edge portions of the upper surface (12), with the exception of sloping surfaces (12A) which are formed at both end portions in the longitudinal directions of the upper surface. As a result, the cutting edges exhibit wavy shapes which are made up from this plurality of groove portions (14) and ridge portions (15) over the sloping surface, with the exception of these sloping surfaces. Furthermore, the groove portions and the ridge portions of the serrations are made as curved surfaces.

## Description

### BACKGROUND OF THE INVENTION

### 1. Field of the Invention

The present invention relates to an indexable insert (hereinafter termed an "insert") which is fitted, for example, to an indexable ball nose endmill or the like.

### 2. Description of the Related Art

In an indexable ball nose endmill, for example, a pair of tip pockets are formed upon a tip portion of a tool main body which is of a generally circular cylindrical shape, upon mutually opposite sides of the rotational axis of the tool, and inserts are fitted by clamping screws, so as to be attachable and detachable as required, to tip fitting seats which are defined upon the wall surfaces in the forward tool rotational direction of these tip pockets.

When such an insert is fitted to its tip fitting seat, its cutting edges, which are formed approximately as ¼ arcs, are each projected from the outer circumferential surface of the tool main body, and the rotational trajectories of these cutting edges are so arranged as to define a single approximately spherical surface. With this sort of indexable ball nose endmill, normally, cutting is performed by using each of these cutting edges in its entirety. Furthermore notches or so called nicks are provided upon the cutting edges, in order to pare away closely the chip which is produced by the cutting, and in order to maintain good efficiency for discarding this chip.

However, if for example cutting processes are performed using an indexable ball nose endmill of the above described construction upon various work materials whose angles of inclination with respect to the rotational axis of the tool vary, in other words, if cutting processes are performed in various different cutting directions, then it can happen that only portions of the cutting edges, and not their entireties, are used for cutting. If in such a case no nicks happen to be formed upon the portions which are being used for cutting, then the chip cannot be pared away closely by the nicks upon the cutting edges.

Furthermore, the problem arises that the cutting resistance during cutting is increased by providing such nicks upon the cutting edges, and the sharpness of the cutting edge is deteriorated.

The present invention has been conceived of in the light of the above described problems, and its objective is to provide an indexable insert which can stably pare away chip, without the cutting resistance being increased.

### SUMMARY OF THE INVENTION

In order to solve the above detailed problems and in order to attain the above described objective, the present invention proposes an indexable insert upon which a generally arcuate cutting edge is formed upon a side ridge edge portion of an upper surface which is opposed to a lower surface which constitutes a seating surface of the insert, and which is to be fitted to a tool main body so that the rotational trajectory of the cutting edge traces approximately a portion of a sphere; and wherein the cutting edge is formed in a wavy shape.

This cutting edge which is defined in a wavy shape may, for example, be formed by serrations defined by a plurality of groove portions and ridge portions being formed upon the upper surface or on the side surface and being disposed alternately thereupon, or may be formed by a plurality of dimpled portions which are formed upon the upper surface so as to intersect the cutting edge.

With this structure, the chip is closely pared away by the cutting edge which is defined in a wavy shape by being formed by the ridge portion between the upper surface and the side surface. Moreover, since the cutting edge presents this wavy shape over almost its entire length, accordingly during cutting processes in various directions, even if only a single portion of the cutting edge performs the cutting, this portion of the cutting edge is necessarily formed in a wavy shape. As a result, it is possible to pare away the chip stably and reliably.

Furthermore, if this cutting edge which is defined in a wavy shape is formed by serrations upon the upper surface, then, if the groove portions are formed so as to be parallel to the lower surface, no increase of cutting resistance such as due to nicks or the like occurs. Or, by inclining the groove portions and the ridge portions so as to approach towards, or alternatively so as to recede from, the lower surface along with increase of distance from the cutting edge, it is possible to impart to the cutting edge which is defined at the side ridge edge portion of the upper surface, a positive or a negative rake angle, set most appropriately according to the cutting situation.

Moreover, if the cutting edge which is formed as a wavy shape is defined by dimpled portions upon the upper surface, then, by forming the portions of the upper surface which connect together the groove portions of the cutting edge either parallel to the lower surface, or so as to approach towards the lower surface along with increase of distance from the cutting edge, there is no increase of cutting resistance due to nicks or the like. Furthermore, since the ridge portions of the cutting edge are defined by the dimpled portions, it becomes possible to set a positive rake angle for the ridge portions of the cutting edge by inclining the surfaces of the dimpled portions which connect together the ridge portions of this cutting edge so as to approach towards the lower surface along with increase of distance from the cutting edge, and accordingly it is possible to ensure suitable sharpness of the cutting edge.

Further, according to a particular specialization of the present invention, the groove portions and the ridge portions may extend in a direction towards the tip of the tool main body and towards the outer circumference of the tool main body, and in a direction perpendicular to the rotational axis of the tool, so that the serrations are formed so as to incline at an angle in the range of from 30° to 90° with respect to the rotational axis of the tool.

If the angle of inclination with respect to the rotational axis of the tool of the direction in which the groove portions and the ridge portions extend is too small, then there is a possibility that it will not be possible to pare away the chip properly with the cutting edge towards the base of the main body of this tool, because the portion of the cutting edge towards the base of the tool main body may present an extremely gentle wavy shape. On the other hand, if this angle of inclination with respect to the rotational axis of the tool is too great, then there is a possibility that it will not be possible to pare away the chip properly with the cutting edge towards the tip of the main body of the tool, because the portion of the cutting edge towards the tip of the tool main body may present an extremely gentle wavy shape.

For this reason, according to the present invention, it is desirable to set the direction in which the groove portions and the ridge portions extend so as to incline at an angle in the range of from 30° to 90° with respect to the rotational axis of the tool. As a result it becomes possible to maintain a most suitable wavy shape over the entire cutting edge, and it is possible to pare away the chip steadily and reliably without any deterioration of the effectiveness of paring away of the chip by the cutting edge which is formed in this wavy shape, even when performing cutting processes in various different cutting directions.

Further, according to another particular specialization of the present invention, the groove portions and the ridge portions may be formed as curved surfaces. Since according to this structure the cutting edge which is formed at the ridge portion between the upper surface and the side surface of the insert is also defined by curved lines, accordingly the strength of this cutting edge is assured.

Furthermore, according to the present invention, when the groove portions and the ridge portions are viewed in cross section perpendicular to the direction in which they extend, the distance in the thickness direction of the indexable insert between the bottoms of the groove portions and the summits of the ridge portions is set to be in the range from 0.3 mm to 3.0 mm.

If the distance between the bottoms of the groove portions and the summits of the ridge portions is too small, then the cutting edge which is defined at the figured edge portion will be almost a straight line, and there is a possibility that it will be impossible to pare away the chip by the insufficiently wavy shape of this cutting edge; while, on the other hand, if the distance between the bottoms of the groove portions and the summits of the ridge portions is too great, then the cutting edge which is defined at the figured edge portion will have extremely high and low steps, and there is a possibility that the strength of this cutting edge will be deteriorated.

For this reason, according to the present invention, when the groove portions and the ridge portions are viewed in cross section perpendicular to the direction in which they extend, it is desirable for the distance in the thickness direction of the indexable insert between the bottoms of the groove portions and the summits of the ridge portions to be set to be in the range from 0.3 mm to 3.0 mm. As a result there is no deterioration in the efficiency of paring away the chip by the wavy shape of the cutting edge, and it is possible to pare away the chip stably and reliably.

Furthermore, according to another particular specialization of the present invention, when the groove portions and the ridge portions are viewed in cross section perpendicular to the direction in which they extend, the distance between the summits of adjacent ones of the ridge portions is desirably set to be in the range from 1.0 mm to 10.0 mm.

If the distance between adjacent ones of the summits of the ridge portions is too small, then the cutting edge which is defined at the figured edge portion will have an extremely small wavy shape; while, on the other hand, if the distance between adjacent ones of the summits of the ridge portions is too great, then the cutting edge which is defined at the figured edge portion will present an extremely gentle wavy shape. As a result, in either case, there is a possibility that it will not be possible to pare away the chip stably and reliably.

For this reason, with the present invention, it is desirable for the distance between the summits of adjacent ones of the ridge portions to be set to be in the range from 1.0 mm to 10.0 mm. As a result, it is possible to pare away the chip stably and reliably, without any deterioration of the efficiency of paring away the chip due to the cutting edge which is defined in a wavy shape.

Furthermore, with the present invention, when the groove portions and the ridge portions are viewed in cross section perpendicular to the direction in which they extend, the groove portions and the ridge portions are formed in curvilinear shapes of which the radiuses of curvature are set to be in the range from 1.0 mm to 10.0 mm.

If the radiuses of curvature of the groove portions and the ridge portions which define the curved cross sectional shape are too small, then the groove portions and the ridge portions become too sharp, and as a result there is a possibility that it may become impossible to ensure a sufficient strength for the cutting edge which is defined at the edge of the upper surface and which presents the same wavy shape. On the other hand, if these radiuses of curvature are too great, then the result is that the groove portions and the ridge portions are formed in gentle curvilinear shapes, and there is a fear that the chip may not be properly pared away, since the cutting edge which is defined at the edge of the upper surface is formed in a wavy shape which is also very gentle and smooth.

For this reason, according to the present invention, it is desirable for the groove portions and the ridge portions to be formed in curvilinear shapes of which the radiuses of curvature are set to be in the range from 1.0 mm to 10.0 mm. As a result the strength of the cutting edge is assured, and it is possible to maintain the efficiency of paring away chip at a desirable level.

Furthermore, according to yet another particular specialization of the present invention, when the groove portions and the ridge portions (in other words, the cutting edge) are viewed in cross section perpendicular to the direction in which they extend, the absolute value of the angle of inclination which the tangent line to the intersection portion between one the ridge portion and the adjacent one of the groove portions towards the tip of the tool main body subtends with respect to the lower surface, and the absolute value of the angle of inclination which the tangent line to the intersection portion between the ridge portion and the other adjacent one of the groove portions towards the base of the tool main body subtends with respect to the lower surface, may be mutually different.

According to this structure, it becomes possible to set the wavy shape of the cutting edge to the most desirable configuration, and it is thereby possible to obtain a cutting edge which has the most suitable characteristic according to the particular cutting situation.

At this time, if the absolute value of the angle of inclination which the tangent line to the intersection portion between the one ridge portion and the adjacent one of the groove portions towards the tip of the tool main body upon the cutting edge subtends with respect to the lower surface, is greater than the absolute value of the angle of inclination which the tangent line to the intersection portion between the ridge portion and the other adjacent one of the groove portions towards the base of the tool main body subtends with respect to the lower surface, then the length of the portions between a ridge portion on the cutting edge and the adjacent groove portion towards the tip of the tool main body, i.e. the lengths of the portions of the cutting edge which have a negative axial rake when this insert is fitted to the tool main body, is small, while the length of the portions between a ridge portion on the cutting edge and the adjacent groove portion towards the base of the tool main body, i.e. the lengths of the portions of the cutting edge which have a positive axial rake when this insert is fitted to the tool main body, is great. As a result, it is possible to ensure a suitable sharpness for the cutting edge.

Furthermore, according to yet another particular specialization of the present invention, the intersection portions between the groove portions and the ridge portions may be formed as planar surfaces.

According to this structure, it becomes possible to set the wavy shape of the cutting edge to the most desirable configuration, and it is possible to obtain cutting edges which have various characteristics, according to the cutting situation.

Furthermore, according to yet another particular specialization of the present invention, the upper surface which connects to the tip portions of the cutting edges may be formed as a sloping surface which slopes so as to approach gradually closer to the lower surface as the leading ends of the cutting edges are approached, and the serrations or the dimpled portions may be formed upon the entire upper surface with the exception of the sloping surfaces.

According to this type of structure it is possible to make the inclined angle of the tip portion of the cutting edge large, which is desirable, since this portion thereof has a small circumferential speed and experiences a very great cutting load. Furthermore, the rigidity of the insert is not deteriorated, since no serrations or dimpled portions are fromed upon the portions of the upper surface where the thickness of the insert is made very thin due to these sloping surfaces.

On the other hand, according to yet another specialization of the present invention, when the serrations which are formed upon the side surface are seen from the direction facing the side surface, the groove portions and the ridge portions may extend in a direction which is inclined with respect to the direction which is perpendicular to the upper surface by an angle which is in the range of from 0° to 10°.

According to this structure, it is possible to dispose the groove portions and the ridge portions, when the insert is fitted to the tool main body, so that they extend along a direction which is almost the same as the rotational direction of the tool. As a result, during the cutting process, it becomes possible to keep the groove portions of the serrations securely apart from the work material, so that increase of cutting resistance, such as was caused in the prior art by nicks or the like, is reliably prevented.

Furthermore, according to a final particular specialization of the present invention, the side surface may be formed in a multi-stepped shape made up from a plurality of surfaces, and these serrations may be formed upon that one of the plurality of surfaces which connects to that cutting edge.

According to this specialized structure, the result is that it is possible reliably to form the wavy form of the cutting edge by the intersection of the groove portions and the ridge portions of the serrations which are formed on the side surface, with the cutting edge. Furthermore, since no serrations are formed upon the other side surface or surfaces, thereby the rigidity of the insert is not deteriorated. Yet further, since the lower surface which constitutes the seating surface does not intersect the groove portions and the ridge portions, therefore no problems occur while fitting the insert to its seat upon the tool main body.

### BRIEF DESCRIPTION OF THE DRAWINGS

FIG. 1 is a perspective view of an insert according to a first preferred embodiment of the present invention.
FIG. 2 is a plan view of the insert according to the first preferred embodiment of the present invention.
FIG. 3 is a side view of the insert according to the first preferred embodiment of the present invention as seen in the direction shown in FIG. 1 by the arrow A.
FIG. 4 is a side view of the insert according to the first preferred embodiment of the present invention as seen in the direction shown in FIG. 1 by the arrow B.
FIG. 5 is a sectional view taken in a plane shown by the arrows C-C in FIG. 2, for explanation of the shape of certain serrations on the insert according to the first preferred embodiment of the present invention.
FIG. 6A is a plan view of an indexable endmill to which the insert according to the first preferred embodiment of the present invention is fitted.
FIG. 6B is an end on view of the indexable endmill to which the insert according to the first preferred embodiment of the present invention is fitted.
FIG. 7 is a side view of the indexable endmill to which the insert according to the first preferred embodiment of the present invention is fitted.
FIG. 8 is a view for explanation of a first variant of the serrations on the insert according to the first preferred embodiment of the present invention.
FIG. 9 is a view for explanation of a second variant of the serrations on the insert according to the first preferred embodiment of the present invention.
FIG. 10 is a perspective view of an insert according to a second preferred embodiment of the present invention.
FIG. 11 is a plan view of the insert according to the second preferred embodiment of the present invention.
FIG. 12 is a plan view of an indexable ball nose endmill to which the insert according to the second preferred embodiment of the present invention is fitted.
FIG. 13 is a perspective view of an insert according to a third preferred embodiment of the present invention.
FIG. 14 is a plan view of the insert according to the third preferred embodiment of the present invention.
FIG. 15 is a side view of the insert according to the third preferred embodiment of the present invention as seen in the direction shown in FIG. 13 by the arrow A.
FIG. 16 is a side view of the insert according to the third preferred embodiment of the present invention as seen in the direction shown in FIG. 13 by the arrow B.
FIG. 17A is a plan view of an indexable endmill to which the insert according to the third preferred embodiment of the present invention is fitted.
FIG. 17B is an end on view of the indexable endmill to which the insert according to the third preferred embodiment of the present invention is fitted.
FIG. 18 is a side view of the indexable ball nose endmill to which the insert according to the third preferred embodiment of the present invention is fitted.
FIG. 19 is a perspective view of an insert according to a fourth preferred embodiment of the present invention.
FIG. 20 is a perspective view of an insert according to a fifth preferred embodiment of the present invention.
FIG. 21 is a plan view of the insert according to the fifth preferred embodiment of the present invention.
FIG. 22 is a side view of the insert according to the fifth preferred embodiment of the present invention as seen in the direction shown in FIG. 20 by the arrow A.
FIG. 23 is a side view of the insert according to the fifth preferred embodiment of the present invention as seen in the direction shown in FIG. 20 by the arrow B.
FIG. 24A is a plan view of an indexable ball nose endmill to which the insert according to the fifth preferred embodiment of the present invention is fitted.
FIG. 24B is an end on view of the indexable endmill to which the insert according to the fifth preferred embodiment of the present invention is fitted.
FIG. 25 is a side view of the indexable ball nose endmill to which the insert according to the fifth preferred embodiment of the present invention is fitted.
FIG. 26 is a perspective view of an insert according to a sixth preferred embodiment of the present invention.
FIG. 27 is a plan view of the insert according to the sixth preferred embodiment of the present invention.
FIG. 28 is a side view of the insert according to the sixth preferred embodiment of the present invention as seen in the direction shown in FIG. 26 by the arrow A.
FIG. 29 is a side view of the insert according to the sixth preferred embodiment of the present invention as seen in the direction shown in FIG. 26 by the arrow B.
FIG. 30 is a view for explanation of the shape of certain serrations on the insert according to the sixth preferred embodiment of the present invention.
FIG. 31A is a plan view of an indexable endmill to which the insert according to the sixth preferred embodiment of the present invention is fitted.
FIG. 31B is an end on view of the indexable endmill to which the insert according to the sixth preferred embodiment of the present invention is fitted.
FIG. 32 is a side view of the indexable ball nose endmill to which the insert according to the sixth preferred embodiment of the present invention is fitted.
FIG. 33 is a view for explanation of a first variant of the serrations on the insert according to the sixth preferred embodiment of the present invention.
FIG. 34 is a view for explanation of a second variant of the serrations on the insert according to the sixth preferred embodiment of the present invention.

### DESCRIPTION OF THE PREFERRED EMBODIMENTS

Various preferred embodiments of the insert according to the present invention will be described in the following with reference to the appended drawings.

### FIRST EMBODIMENT

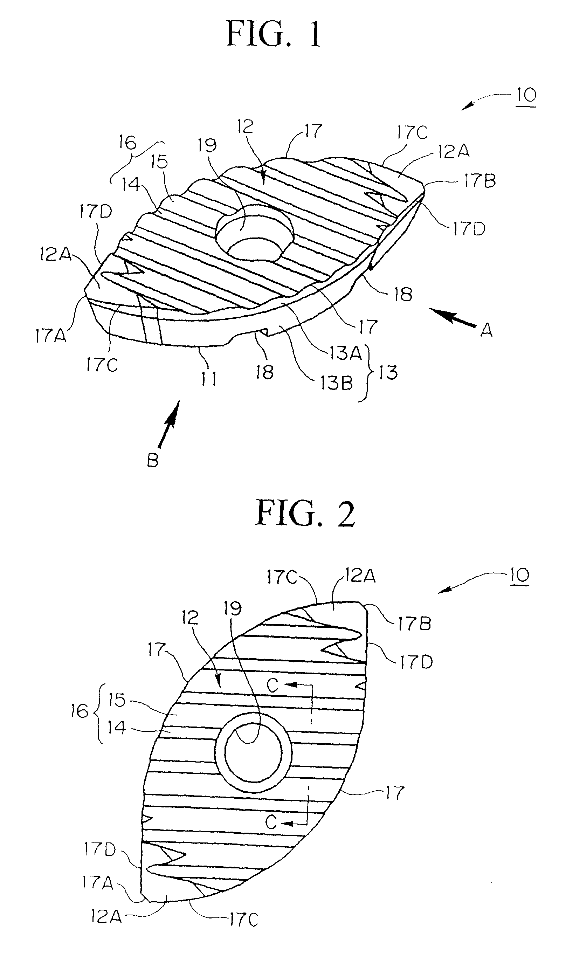

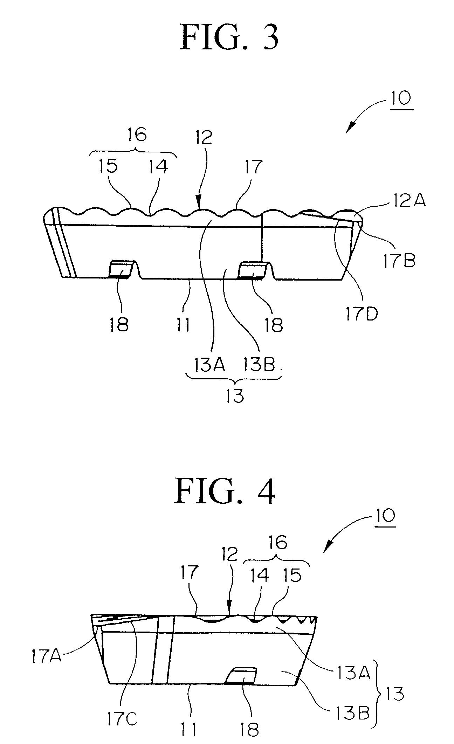

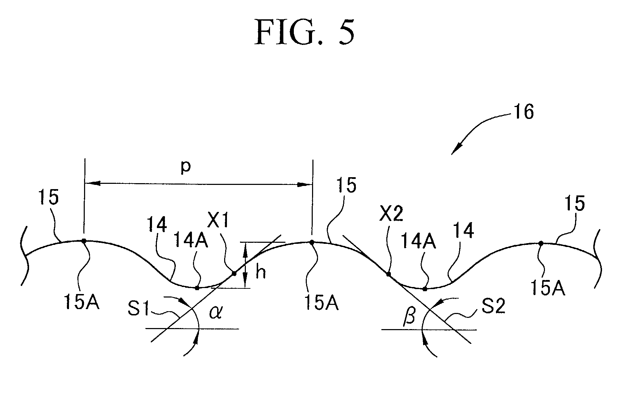

FIG. 1 is a perspective view of an insert 10 according to a first preferred embodiment of the present invention; FIG. 2 is a plan view of this insert 10; FIG. 3 is a side view of this insert 10 as seen in the direction shown in FIG. 1 by the arrow A; FIG. 4 is a side view of this insert 10 as seen in the direction shown in FIG. 1 by the arrow B; and FIG. 5 is a sectional view taken in a plane shown by the arrows C-C in FIG. 2, for explanation of the shape of certain serrations on this insert 10.

The insert 10 is formed from a hard material such as, for example, cemented carbide or the like, and, as shown in FIGS. 1 through 4, is shaped as a plate which, as seen in plan view, roughly defines a spindle shape; it is formed with an upper surface 12 which constitutes a cutting surface, an opposite lower surface 11 which constitutes a seating surface when this insert 10 is fitted to a tool main body, and a side surface 13 which constitutes a release surface, and which is formed as a positive surface, being provided so as to incline gradually outwards from the lower surface 11 towards the upper surface 12. It should be understood that this side surface 13 comprises a first escape surface 13A which joins to the upper surface 12 side of the insert 10, and a second escape surface 13B which has an inclination greater than that of the first escape surface 13A.

A through hole 19 for a clamping screw which will be described hereinafter is formed in the central portion of the insert 10 and communicates together the upper surface 12 and the lower surface 11 thereof, and, for example, two key grooves 18 are formed upon the lower surface 11 on opposite sides of this through hole 19, extending transversely to the longitudinal direction of the insert 10.

At the ridge portion between the upper surface 12 of the insert 10 and its side surface 13 there are defined a pair of cutting edges 17, which roughly define quarter circular arc shapes as shown in FIGS. 1 and 2, and which are positioned upon mutually opposite sides of the through hole 19. These cutting edges 17 are formed symmetrically about the central point of the insert 10 as seen in plan view, so that a single such insert 10 can be used twice by being rotated through 180°.

A pair of sloping surfaces 12A are formed upon the upper surface 12 at its end portions in its longitudinal direction, so as each to confront the corner portion of one of the cutting edges 17A, 17B at its leading end and the corner portion of the other of the cutting edges 17A, 17B at its trailing end, and so as to slope to approach towards the lower surface 11 of the insert 10. By forming these sloping surfaces 12A upon the upper surface 12, a first arcuate sloping cutting edge 17C is defined along the leading end of one of the cutting edges 17 from the corner portion 17A, sloped so that its distance from the lower surface 11 increases along with increasing distance from the corner portion 17A, and a second arcuate sloping cutting edge 17D is defined along the trailing end thereof to the other corner portion 17B, similarly sloped so that its distance from the lower surface 11 increases along with increasing distance from said corner portion 17B. In the same manner, arcuate first and second sloping cutting edges 17C and 17D are defined upon the other cutting edge 17 as well.

Furthermore, a plurality of groove portions 14 and ridge portions 15 are formed upon the remainder portion of the upper surface 12 other than these sloping surfaces 12A, and these groove portions 14 and ridge portions 15 are arranged alternatingly and extend in a direction transverse to the lengthwise direction of the insert 10, so as to define a plurality of serrations 16. This plurality of groove portions 14 and ridge portions 15 run mutually in parallel and are spaced at approximately equal intervals, and the bottoms of the groove portions 14 extend parallel to the lower surface 11 of the insert 10. Furthermore, each of this plurality of groove portions 14 and ridge portions 15 which define these serrations 16 is formed as a smooth curved surface, and these surfaces are smoothly connected to one another. Yet further, the plurality of groove portions 14 and ridge portions 15 which define these serrations 16 are formed so as to extend as far as the approximately arcuate cutting edges 17 which are formed at the side edge portions of the upper surface 12, and as a result, when seen from the side surfaces as shown in FIGS. 3 and 4, almost the entire lengths of the cutting edges 17 (i.e. the entire cutting edges 17 with the exception of the first sloping cutting edges 17C and the second sloping cutting edges 17D) appear as wavy forms which are defined by smooth curves.

When the serrations 16 are viewed in cross section perpendicular to the direction in which their groove portions 14 and the ridge portions 15 extend, the shapes of the groove portions and the ridge portions 15 are as shown in FIG. 5. As shown in this figure, the ridge portions 15 are formed as curves convex from the lower surface 11 towards the upper surface 12 (i.e. upwards as seen in FIG. 5) and of radius of curvature a, while the groove portions 14 are formed as curves concave from the upper surface 12 towards the lower surface 11 (i.e. downwards as seen in FIG. 5) and of radius of curvature b. And the groove portions 14 and ridge portions 15 which are defined by these curves are connected smoothly together, and thereby define the wavy forms of the cutting edges 17.

In this case, the radius of curvature a of the ridge portions 15 is set in the range from 1.0 mm to 10.0 mm, while the radius of curvature b of the groove portions 14 is likewise set in the range from 1.0 mm to 10.0 mm, and moreover these radiuses of curvature satisfy the relationship a>b.

Furthermore, the distance h between the summits 15A of the ridge portions 15 and the bottoms 14A of the groove portions 14 in the thickness direction of the insert 10, in other words, in the direction perpendicular to its lower surface 11, is set in the range from 0.3 mm to 3.0 mm.

Yet further, the distance p between the summits 15A of adjacent ridge portions 15, in other words, the pitch of the ridge portions 15, is set in the range from 1.0 mm to 10.0 mm. It will be understood that the distance between the bottoms 14A of adjacent groove portions 14 is the same as this distance p between the summits 15A of adjacent ridge portions 15.

Moreover, the absolute value of the angle of inclination α which the tangent line S1 to the intersection portion X1 between a ridge portion 15 and the adjacent one of the groove portions 14 towards the tip corner portion 17A side of the cutting edge 17 subtends with respect to the lower surface 11 (α <0° if the direction of inclination so as to become farther spaced away from the lower surface 11 as the tip corner portion 17A side [the left side in FIG. 5, which is the tip side of the tool main body when the insert 10 is fitted to a tool main body 20 which will be described hereinafter] of one of the cutting edges 17 is approached is taken as positive), and the absolute value of the angle of inclination β which the tangent line S2 to the intersection portion X2 between the ridge portion 15 and the adjacent one of the groove portions 14 towards the base corner portion 17B side (the right side in FIG. 5, which is the base side of the tool main body when the insert 10 is fitted to the tool main body 20 which will be described hereinafter) of that one of the cutting edges 17 subtends with respect to the lower surface 11 (where β >0°), are the same (so that α =-β). In other words, in FIG. 5, along with the ridge portions 15 being formed symmetrically about their summits 15A, the groove portions 14 are also formed symmetrically about their bottoms 14A.

Due to the cross sections of the groove portions 14 and the ridge portions 15 of the serrations 16 being formed as described above, when the cutting edge 17 which is formed in a wavy shape by these groove portions 14 and ridge portions 15 is seen from the direction opposing the side surface 13 along the direction in which the groove portions 14 and the ridge portions 15 extend, in other words, in the direction of the arrow A in FIG. 1 (i.e. as in FIG. 3), then this cutting edge 17 presents the same wavy shape as the one shown in FIG. 5.

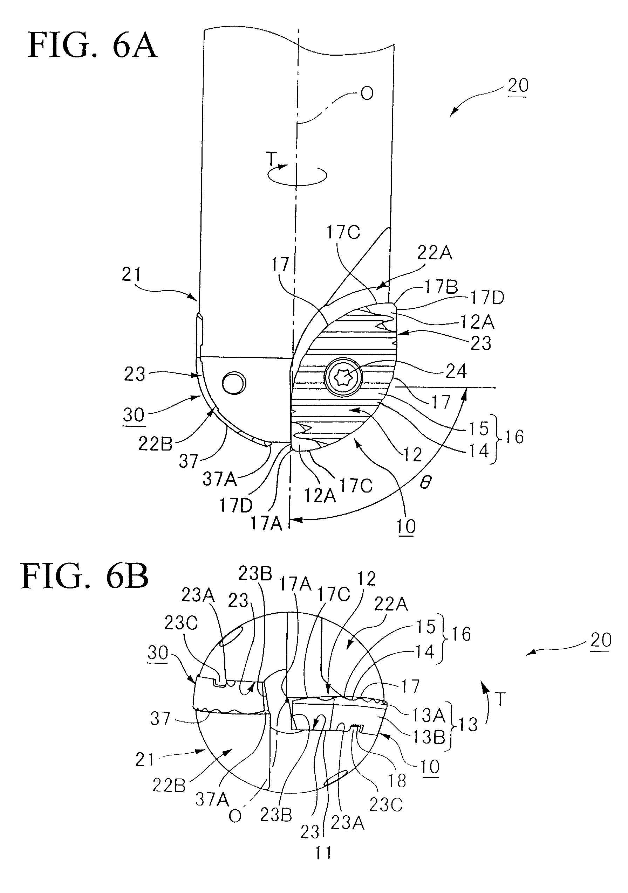

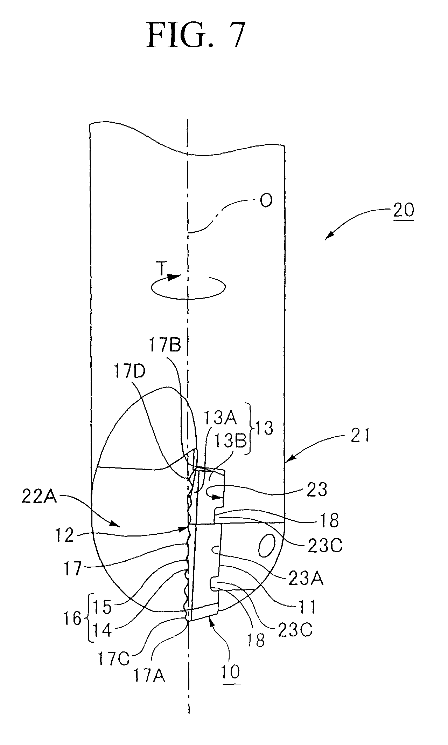

The insert 10 according to this first preferred embodiment of the present invention has the structure described above. Next, an indexable ball nose endmill which is equipped with a plurality of these inserts 10 will be explained with reference to FIGS. 6A, 6B, and 7; in the shown example this double edged mill is fitted with two such inserts 10. FIG. 6A is a plan view of an indexable endmill to which this insert according to the first preferred embodiment of the present invention is fitted; FIG. 6B is an end on view of this endmill; and FIG. 7 is a side view of this endmill.

In this indexable ball nose endmill, a tool main body 20 is roughly shaped as a cylinder which is rotated about its central rotational axis O, and a tip portion 21 of this tool main body 20 is shaped roughly as a hemisphere. Mutually opposite sides of this tip portion 21 are shaped as a pair of tip pockets 22A and 22B which, as shown in FIG. 6B, lie on opposite sides of its rotational axis O and which are formed as perpendicular cutaways as seen from the tip of the tool main body 20; and each of these tip pockets 22A and 22B is formed with a tip fitting seat 23 upon its wall surface which faces towards the rotational direction T.

Each of the tip fitting seats 23 is made up from a bottom surface 23A upon which keys 23C are formed, which is defined so as to intersect the outer circumferential surface of the tip portion 21 somewhat stepped backward against the rotational direction T from the wall surfaces of the tip pockets 22A and 22B, and a wall surface 23B which is approximately perpendicular to this bottom surface 23A. Furthermore, as shown in FIG. 7, the bottom surfaces 23A are formed so as to incline backward against the rotational direction T in the direction of the base end of the tool main body.

The insert 10 of the first preferred embodiment is fitted to the tip fitting seat 23 of one of the tip pockets 22A by a clamping screw 24 which is passed through its through hole 19, so that its upper surface 12 faces in the forward rotational direction T, with the corner portion 17A of the leading end of one of its cutting edges 17 being positioned upon the rotational axis O, and with the side surface 13 which connects to its other cutting edge 17 being contacted against the wall surface 23B; and, from here, this one cutting edge 17 is arranged so as to extend to the outer circumference of the tool main body towards its base end, and moreover, the locus defined by this one of the cutting edges 17 as it rotates around the rotational axis O is roughly hemispherical. Furthermore, the keys 23C which are formed upon the bottom surface 23A of the tip fitting seat 23 are engaged with the key grooves 18 which are formed upon the lower surface 11 of the insert 10, and slippage of the insert 10 is prevented by this engagement.

At this time, the insert 10 is fitted to the tip fitting seat 23 so that the groove portions 14 and the ridge portions 15 of the serrations 16 which are formed upon the upper surface 12 of the insert 10 extend in a direction perpendicular to the rotational axis O of the tool, so that their angle of inclination θ with respect to the rotational axis O of the tool is 90°. Furthermore, the first sloping cutting edge 17C of the cutting edge 17 is set so that its axial rake angle is negative.

Moreover, upon the cutting edge 17, the axial rake of the portions between the ridge portions 15 and the groove portions 14 adjacent thereto towards the tip of the tool main body is set to be negative, while the axial rake of the portions between the ridge portions 15 and the groove portions 14 adjacent thereto towards the base of the tool main body is set to be positive. In other words, the cutting edge 17 which presents the wavy shape is formed so as to have an axial rake which repeatedly is negative and positive alternately in the direction from the tip of the tool main body towards its base end.

Furthermore, the insert 30 which is fitted to the tip fitting seat 23 of the other tip pocket 22B is formed to be of roughly the same shape as the insert 10 of this first preferred embodiment, but somewhat smaller. With this insert 30, as shown in FIGS. 6A and 6B, the corner portion 37A of the leading end of its cutting edge 37 is somewhat further positioned towards the outer circumference of the tool main body than the corner portion 17A of the leading end of the cutting edge 17 of the insert 10 of this first preferred embodiment, and its cutting edge 37 extends out to the outer circumference of the tool main body towards its base end, so that the locus defined by this cutting edge 37 as it rotates around the rotational axis O is positioned to overlap the locus defined by the cutting edge 17 of the insert 10 of the first preferred embodiment.

At this time, the position which the rotational trajectory around the rotational axis O of each of the groove portions 14 upon the cutting edge 17 of the insert 10 passes through is the same as the position which the rotational trajectory around the rotational axis O of each of the ridge portions 15 upon the cutting edge 37 of the insert 30 passes through, and moreover, the position which the rotational trajectory around the rotational axis O of each of the ridge portions 15 upon the cutting edge 17 of the insert 10 passes through is the same as the position which the rotational trajectory around the rotational axis O of each of the groove portions 14 upon the cutting edge 37 of the insert 30 passes through.

Thus, when the cutting edge 17 is seen from the direction confronting the upper surface 12, this cutting edge 17 has a gentle wavy shape made up from the groove portions 14 and the ridge portions 15, since the side surface 13 of the insert 10 is a positive insert which is gradually inclined inwards from its upper surface 12 towards its lower surface 11. Accordingly, upon the surface of the work material which has been cut by the cutting edge 17 of the insert 10 which has this gentle wavy surface, a processed surface is formed which has the same gentle wavy shape made up from groove portions and ridge portions, but since the inserts 10 and 30 are fitted in positions as described above, the ridge portions which remain upon the processed surface of the work material after cutting by the insert 10 come to be cut, during cutting by the insert 30, by the ridge portions 15 of the cutting edge 37 of the insert 30. As a result, the surface roughness of the processed surface of the work material is not reduced.

By forming upon the upper surface 12 the serrations 16 which are made up from the plurality of groove portions 14 and ridge portions 15, this insert 10 according to the first preferred embodiment of the present invention, having the structure as described above, is able to pare the chip away closely, because it is thus provided with the wavy shaped cutting edge 17, and due to the wavy shape of this cutting edge 17. Moreover, in a case such as when performing the cutting process in various cutting directions, even if only a single portion of the cutting edge 17 is being utilized for the cut, this portion of the cutting edge 17 which is serving for this cut necessarily is formed in a wavy shape, since the wavy shape is defined over almost the entire length of the cutting edge 17. As a result it is possible to pare away the chip in a stable manner, and the pared away chip is steadily rejected in a suitable fashion.

Furthermore, since the groove portions 14 of the serrations 16 are formed to be parallel with the lower surface 11, undesirable increase of the cutting resistance due to nicks or the like does not occur. In addition, the cutting resistance is even reduced, since the start timing of the cutting toward the work material are varied between the groove portions 14 and the ridge portions 15 of the cutting edge 17.

Yet further, another result of the fact that the groove portions 14 and the ridge portions 15 of the serrations 16 are defined by curved surfaces is that the strength of the cutting edge 17 is ensured by this wavy shape being defined, since the cutting edge 17, which is formed at the side ridge edge portion of the upper surface 12, also follows the wavy shape which is defined by these curved lines.

Moreover, there is no deterioration of the efficiency of paring away the chip closely even when performing the cutting process in various cutting directions by the wavy shape which is defined by the cutting edge 17, since the serrations 16 are formed so as to extend in the direction perpendicular to the rotational axis O of the groove portions 14 and the ridge portions 15. As a result, in particular, the efficiency is good when the feeding is provided in the direction perpendicular to the rotational axis O.

Furthermore, if the distance h in the thickness direction of the insert 10 between the bottoms 14A of the groove portions 14 and the summits 15A of the ridge portions 15 when the groove portions 14 and the ridge portions 15 are seen in cross section perpendicular to the direction in which they extend is too small, then the cutting edge 17 which is formed as a wavy shape by these groove portions 14 and ridge portions 15 undesirably becomes nearly a straight line, and there is a possibility that it may become impossible for the chip to be pared away by this cutting edge 17. On the other hand, if this distance h is too large, then the cutting edge 17 has a wavy shape with extremely great variation between its high and low portions, and there is a possibility that this may lead to deterioration of the strength of this cutting edge 17. By contrast to these extremes, since in this first preferred embodiment of the present invention the value of the distance h is set to be in the most suitable range of from 0.3 mm to 3.0 mm, thereby it is possible to obtain a cutting edge 17 whose strength is assured, and which also can pare away the chip stably and reliably.

Yet further, when in the same manner the groove portions 14 and the ridge portions 15 are seen in cross section perpendicular to the direction in which they extend, if the distance p between adjacent ones of the summits 15A of the ridge portions 15 is too small, then the cutting edge 17 is undesirably formed in a very small wavy shape; while on the other hand, if this distance p is too great, then the cutting edge 17 has an extremely gentle wavy shape, and this will create a possibility that it cannot pare away the chip properly. By contrast to these extremes, since in this first preferred embodiment of the present invention the value of the distance p is set to be in the most suitable range of from 1.0 mm to 10.0 mm, thereby it is possible to ensure that the cutting edge 17 can pare away the chip stably and reliably.

Moreover, when in the same manner the groove portions 14 and the ridge portions 15 are seen in cross section perpendicular to the direction in which they extend, if the respective radiuses of curvature a and b of the groove portions 14 and the ridge portions 15 which define the curved cross sectional shape are too small, then the cutting edge 17 whose wavy shape is defined by these groove portions 14 and ridge portions 15 also has this same shape, and as a result there is a possibility that it may become impossible to ensure a sufficient strength for this cutting edge 17, since the groove portions 14 and the ridge portions 15 become too sharp. On the other hand, if these radiuses of curvature a and b are too great, then the performance for paring away the chip is deteriorated, since the cutting edge 17 is formed in a wavy shape which is very smooth. By contrast to these extremes, in this first preferred embodiment of the present invention, by forming the curved cross sectional shape with the radiuses a and b of the groove portions 14 and the ridge portions 15 being in the most suitable range of from 1.0 mm to 10.0 mm, thereby it is possible to assure the strength of the cutting edge 17, and to ensure that it can maintain a good performance for paring away the chip.

Furthermore, the first sloping cutting edges 17C which are positioned at the comer portions 17A of the leading ends of the cutting edges 17 come to be defined upon the upper surface 12, since the sloping surfaces 12A are formed upon the upper surface 12. As a result, it is possible to maximize the inclined angle of the tip portion of the cutting edge 17 whose circumferential speed is small and which receives a great cutting load. Moreover the rigidity of the insert 10a is increased, since no serrations 16 are formed upon the upper surface 12 of the portions of the insert 10a which are made to be very thin due to the sloping surfaces 12A. However, although in this first preferred embodiment of the present invention the sloping surfaces 12A are formed at both end side portions in the longitudinal direction of the upper surface 12 of the insert 10, it would alternatively be acceptable not to form these sloping surfaces 12A, if it is possible to ensure that the thickness of the insert 10 is sufficient.

Furthermore although, in this first preferred embodiment, when the groove portions 14 and the ridge portions 15 are seen in cross section perpendicular to the direction in which they extend, the absolute value of the angle of inclination α with respect to the lower surface 11 of the tangent line S1 at the intersection portion X1 between a ridge portion 15 and the groove portion 14 adjacent thereto towards the tip of the tool main body, and the absolute value of the angle of inclination β with respect to the lower surface 11 of the tangent line S2 at the intersection portion X2 between a ridge portion 15 and the groove portion 14 adjacent thereto towards the base of the tool main body, are equal to one another, it would also be possible, as an alternative, for these angles of inclination α and β to be different from one another.

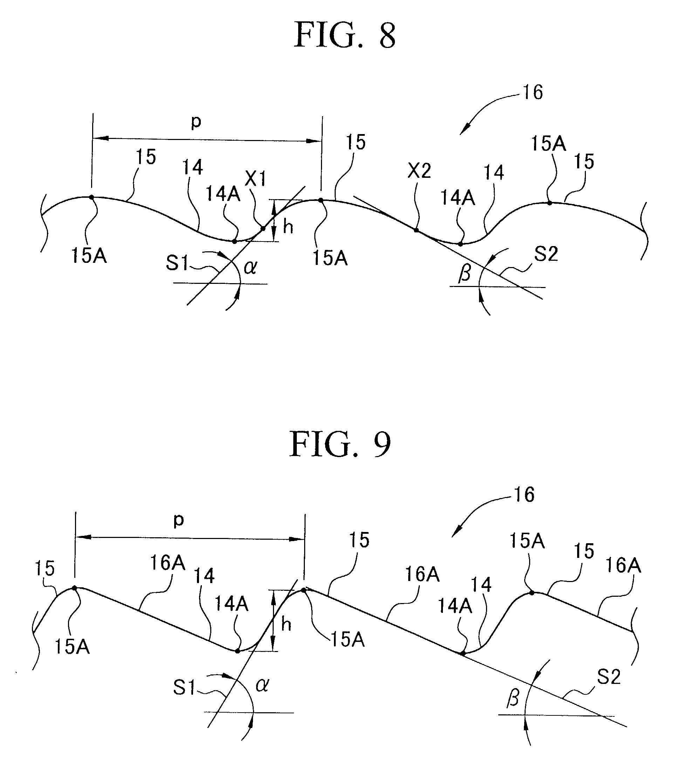

For example, as shown in a first variant embodiment shown in FIG. 8, it is also acceptable to form the serrations 16 so that the absolute value of the angle of inclination α with respect to the lower surface 11 of the tangent line S1 at the intersection portion X1 between a ridge portion 15 and the groove portion 14 adjacent thereto towards the tip of the tool main body (the left side in FIG. 8), is greater than the absolute value of the angle of inclination β with respect to the lower surface 11 of the tangent line S2 at the intersection portion X2 between a ridge portion 15 and the groove portion 14 adjacent thereto towards the base of the tool main body (the right side in FIG. 8).

When this type of structure is employed, the portion between a ridge portion 15 upon the cutting edge 17 and the groove portion 14 adjacent thereto towards the tip of the tool main body, in other words, when the insert 10 is fitted to the tool main body 20, the length of the cutting edge 17 which is set at a negative axial rake, becomes smaller. Furthermore, the portion between a ridge portion 15 upon the cutting edge 17 and the groove portion 14 adjacent thereto towards the base of the tool main body, in other words, when the insert 10 is fitted to the tool main body 20, the length of the cutting edge 17 which is set at a positive axial rake, becomes greater. As a result, the sharpness of the cutting edge 17 which is formed in a wavy shape is enhanced.

It should be understood that, when these angles of inclination α and β are different from one another, if as in the above described first preferred embodiment the serrations 16 are formed so that the plurality of groove portions 14 and the ridge portions 15 are extended along a direction which crosses the longitudinal direction of the upper surface 12 of the insert 10, with the pair of cutting edges 17 which are defined upon the side ridge edge portions of this upper surface 12 being formed in wavy shapes, so that a single insert can be turned around and used twice, then, with respect to the shape of one of these cutting edges 17, the other cutting edge 17 necessarily is formed in a directly opposite shape (i.e., the absolute value of the angle of inclination α on the one of the cutting edges 17 is equal to the absolute value of the angle of inclination β on the other of the cutting edges 17, and also the absolute value of the angle of inclination β on the one of the cutting edges 17 is equal to the absolute value of the angle of inclination α on the other of the cutting edges 17).

In this case, for example, the serrations 16 may not be formed upon the central portion of the upper surface 12 of the insert 10, but rather these serrations 16 of the desired shape may be formed only upon the periphery of the upper surface 12 of each of the pair of cutting edges 17. If this structure is utilized, it becomes possible to cut with a cutting edge 17 which has the desired shape, using either the one or the other of the two cutting edges 17.

Furthermore it would be possible, as an alternative, not as in the first preferred embodiment to form the cutting edges 17 by the wavy shapes which connect together the groove portions 14 and ridge portions 15 of the serrations 16 which are each formed as curved surfaces, but instead to make the portions where the groove portions 14 and the ridge portions 15 meet one another as planes, so that, in a cross section perpendicular to the direction in which the groove portions 14 and the ridge portions 15 extend, the curvilinear shapes of the groove portions 14 and the curvilinear shapes of the ridge portions 15 are smoothly connected by straight line portions.

For example, as shown in a second variant embodiment shown in FIG. 9, it would be acceptable to connect together the groove portions 14 and the ridge portions 15 of the serrations 16 in the above described first variant embodiment by straight line portions 16A. If this structure is employed, it is possible to obtain a cutting edge 17 of a wavy shape which has the most suitable characteristics in a hypothetical cutting situation. It should be understood that the tangent lines S2 in this type of case are the same as the straight line portions 16A which connect the groove portions 14 and the ridge portions 15.

### SECOND EMBODIMENT

A second preferred embodiment of the present invention will be explained; in this explanation, to portions which are identical to portions of the first preferred embodiment described above and/or which have the same functions, the same reference symbols will be appended, and their description will be curtailed.

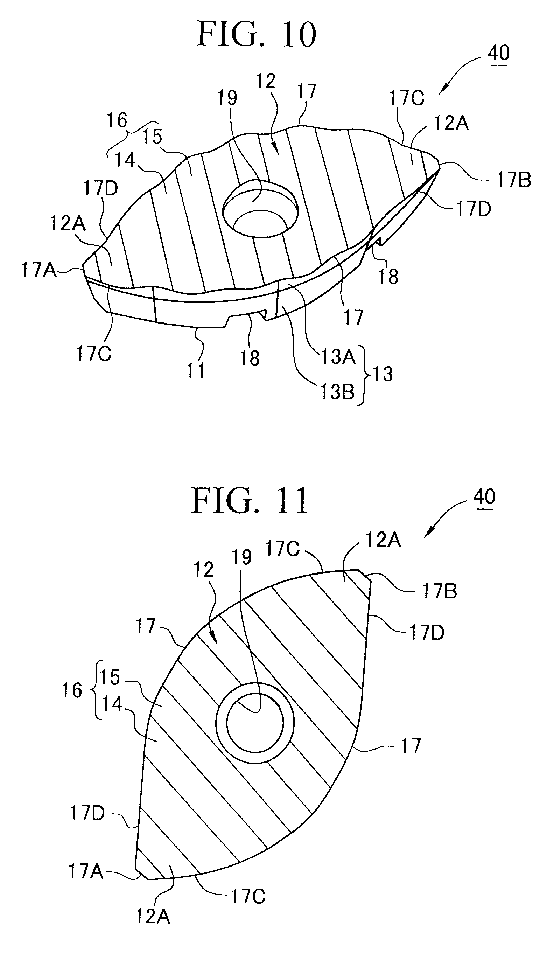

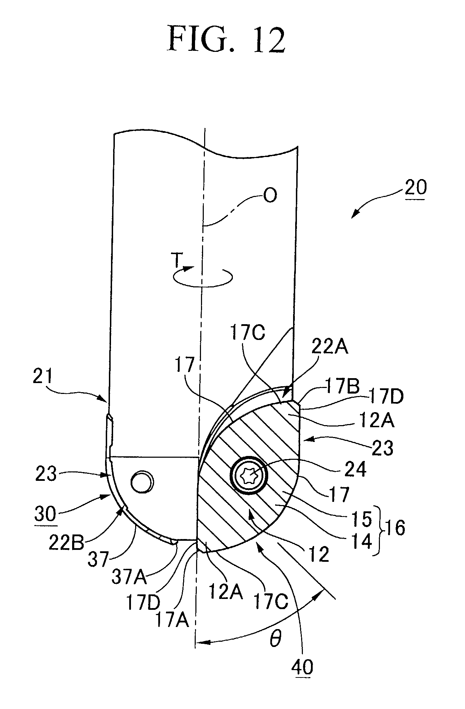

FIG. 10 is a perspective view of this insert according to the second preferred embodiment; FIG. 11 is a plan view of the upper surface thereof; and FIG. 12 is a plan view of an indexable ball nose endmill to which this insert according to the second preferred embodiment is fitted.

An insert 40 according to the second preferred embodiment has the same structure as the insert 10 of the first preferred embodiment described above, with the exception of the direction in which the groove portions 14 and the ridge portions 15 of the serrations 16 extend.

That is to say, as shown in FIGS. 10 and 12, when the insert 40 is fitted to a tool main body 20, the groove portions 14 and the ridge portions 15 which make up the serrations 16 extend in a direction facing the tip of the tool main body and facing towards the outer circumference of the tool main body, with their angle of inclination θ to the rotational axis O of the ball nose endmill being set to be in the range from 30° to 90°. In the example shown in the figures, for example, the groove portions 14 and the ridge portions 15 define serrations 16 which have an angle of inclination θ to the rotational axis O of 45º.

Moreover, in this second preferred embodiment of the present invention, the serrations 16 are also formed upon the sloping surfaces 12A upon the upper surface 12.

According to this insert 40 of this second preferred embodiment, in addition to the beneficial results described above with reference to the first preferred embodiment, it also becomes possible to maintain the most suitable wavy shape over the entire lengths of the cutting edges 17, since the angle of inclination θ with respect to the rotational axis O in which the groove portions 14 and the ridge portions 15 extend is set to be in the range from 30° to 90°. As a result, there is no deterioration of the effectiveness for paring away the chip by the cutting edges 17 which are formed in these wavy shapes, even if the cutting process is performed in various different cutting directions.

On the other hand, if the angle of inclination θ with respect to the rotational axis O in which the groove portions 14 and the ridge portions 15 extend is set to be too small, then the portion of the cutting edge 17 towards the base of the tool main body comes to be defined in an extremely gentle wavy shape, and a possibility arises that it may become impossible to pare away chip towards the base of the tool main body. Conversely, if the angle of inclination θ is too great, then the portion of the cutting edge 17 towards the tip of the tool main body comes to be defined in an extremely gentle wavy shape, and a possibility arises that it may become impossible to pare away chip towards the tip of the tool main body.

Furthermore, as possible variations of this second preferred embodiment of the present invention, it would of course also be acceptable to incorporate the modified structures for the groove portions 14 and the ridge portions 15 which make up the serrations 16 which were shown in FIGS. 8 and 9 as variant embodiments for the first preferred embodiment, in the same manner.

Yet further, the shapes of the groove portions 14 and the ridge portions 15 which make up the serrations 16 are not to be considered as being limited to those shown above in the descriptions of the first and the second preferred embodiments; any suitable shapes may be utilized, provided that they provide a suitably effective paring away of the chip by the cutting edge 17.

Moreover, although in each of the first and the second preferred embodiments described above the insert which was used was formed in a generally spindle shape which was defined by the pair of cutting edges 17, in fact the shape of the insert is not to be considered as limited by this structure; it would alternatively be acceptable to utilize an insert such as one upon which a cutting edge was formed upon only one side.

### THIRD EMBODIMENT

A third preferred embodiment of the present invention will be explained; again, in this explanation, to portions which are identical to portions of the first preferred embodiment described above and/or which have the same functions, the same reference symbols will be appended, and their description will be curtailed.

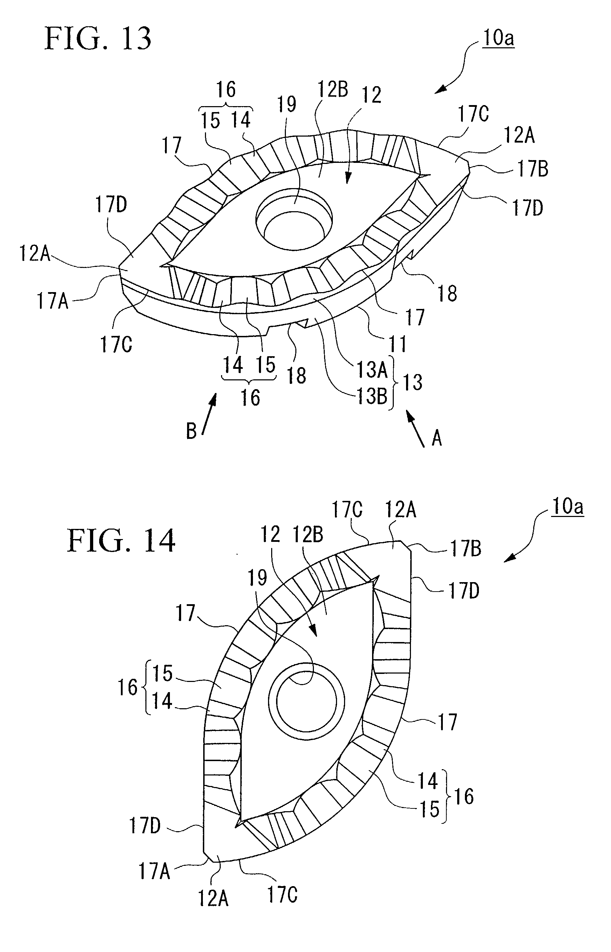

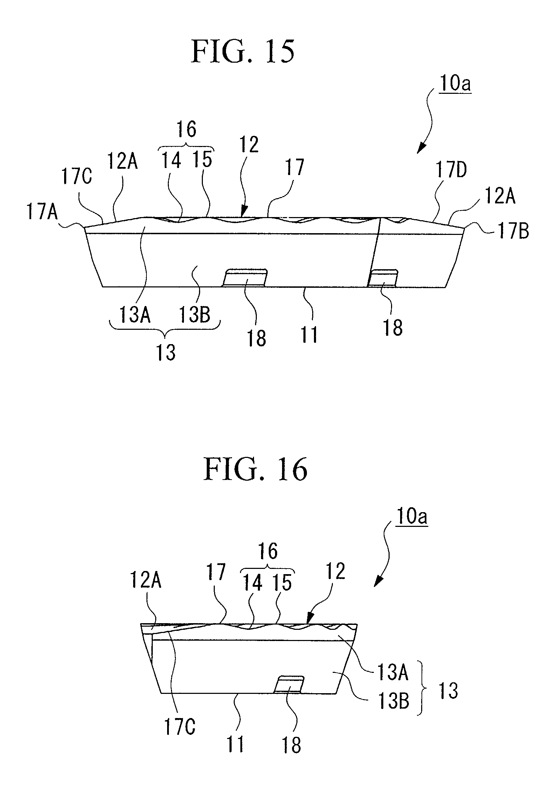

FIG. 13 is a perspective view of this insert according to the third preferred embodiment of the present invention; FIG. 14 is a plan view of the upper surface thereof; FIG. 15 is a side view of this insert as seen in the direction shown in FIG. 13 by the arrow A; and FIG. 16 is a side view thereof as seen in the direction shown in FIG. 13 by the arrow B.

An insert 10a of this third preferred embodiment, just like the insert 10 of the first preferred embodiment described above, is made from a hard material such as cemented carbide or the like, and, as shown in FIGS. 13 through 16, is roughly shaped in a spindle shape; moreover, as before, it is formed as a positive insert, with its side surface 13 being gradually inclined outwards from its lower surface 11 towards its upper surface 12.

Furthermore, along with the region upon the upper surface 12 around a through hole 19 in the central portion thereof being formed as a plane surface 12B which is parallel to the lower surface 11, in the region peripheral to this planar surface 12B, with the exception of sloping surfaces 12A, in other words, in the vicinity of the cutting edges 17 which are defined at the side ridge edge portions of the upper surface 12, serrations 16 are formed by alternatingly providing a plurality of groove portions 14 and ridge portions 15 in series. This plurality of groove portions 14 and ridge portions 15 are arranged at roughly equal intervals, and moreover are formed so as to be parallel with the lower surface 11. Furthermore, just as with the insert 10 of the first preferred embodiment described above, the plurality of groove portions 14 and ridge portions 15 which make up the serrations 16 are each formed as a smoothly curved surface, and they are mutually smoothly connected together. Moreover, each of the plurality of groove portions 14 and ridge portions 15 of these serrations 16 extends in a direction perpendicular to one of the roughly arcuate cutting edges 17 which is defined at the side ridge edge portion of the upper surface 12, and intersects this cutting edge 17 perpendicularly at some position therealong. As a result, when seen from the side surface of this insert 10a, the entire lengths of the cutting edges 17 (the cutting edges 17, with the exception of the first sloping cutting edge 17C and the second sloping cutting edge 17D) present a wavy shape which is defined as a smooth curve, as shown in FIGS. 15 and 16.

Here, the forms of the cutting edges 17 which present these wavy shapes due to the groove portions 14 and the ridge portions 15 which constitute the serrations 16 are the same as those in the case of the first preferred embodiment, shown in the above FIG. 5. In other words, the ridge portions 15 are formed as curves convex from the lower surface 11 towards the upper surface 12 and of radius of curvature a, while the groove portions 14 are formed as curves concave from the upper surface 12 towards the lower surface 11 and of radius of curvature b. And the groove portions 14 and ridge portions 15 which are defined by these curves are connected smoothly together, and thereby in cross section define the wavy forms of the cutting edges 17.

In this case, the radius of curvature a of the ridge portions 15 is set in the range from 1.0 mm to 10.0 mm, while the radius of curvature b of the groove portions 14 is likewise set in the range from 1.0 mm to 10.0 mm, and moreover these radiuses of curvature satisfy the relationship a>b.

Furthermore, the distance h between the summits 15A of the ridge portions 15 and the bottoms 14A of the groove portions 14 in the thickness direction of the insert 10a, in other words, in the direction perpendicular to its lower surface 11, is be set in the range from 0.3 mm to 3.0 mm.

Yet further, the distance p between the summits 15A of adjacent ridge portions 15, in other words, the pitch of the ridge portions 15, is set in the range from 1.0 mm to 10.0 mm. It will be understood that the distance between the bottoms 14A of adjacent groove portions 14 is the same as this distance p between the summits 15A of adjacent ridge portions 15.

Moreover, the absolute value of the angle of inclination α which the tangent line S1 to the intersection portion X1 between a ridge portion 15 and the adjacent one of the groove portions 14 towards the leading end corner portion 17A side of the cutting edge 17 subtends with respect to the lower surface 11 (α <0° if the direction of inclination so as to become farther spaced away from the lower surface 11 as the tip corner portion 17A side [the tool main body tip side when the insert 10a is fitted to a tool main body 20a which will be described hereinafter] of one of the cutting edges 17 is approached is taken as positive), and the absolute value of the angle of inclination β which the tangent line S2 to the intersection portion X2 between the ridge portion 15 and the adjacent one of the groove portions 14 towards the base corner portion 17B side (the tool main body base side when the insert 10a is fitted to the tool main body 20a which will be described hereinafter) of that one of the cutting edges 17 subtends with respect to the lower surface 11 (where β >0°), are the same (so that α =- β ). In other words, along with the ridge portions 15 being formed symmetrically about their summits 15A, the groove portions 14 are also formed symmetrically about their bottoms 14A.

Due to the cross sections of the groove portions 14 and the ridge portions 15 of the serrations 16 being formed as described above, when the cutting edge 17 which is formed in a wavy shape by these groove portions 14 and ridge portions 15 is seen from the direction opposing the side surface 13 along the direction in which the groove portions 14 and the ridge portions 15 extend, in other words, in the direction of the arrow A in FIG. 13, then this cutting edge 17 presents the same wavy shape as the one shown in the above described FIG. 5.

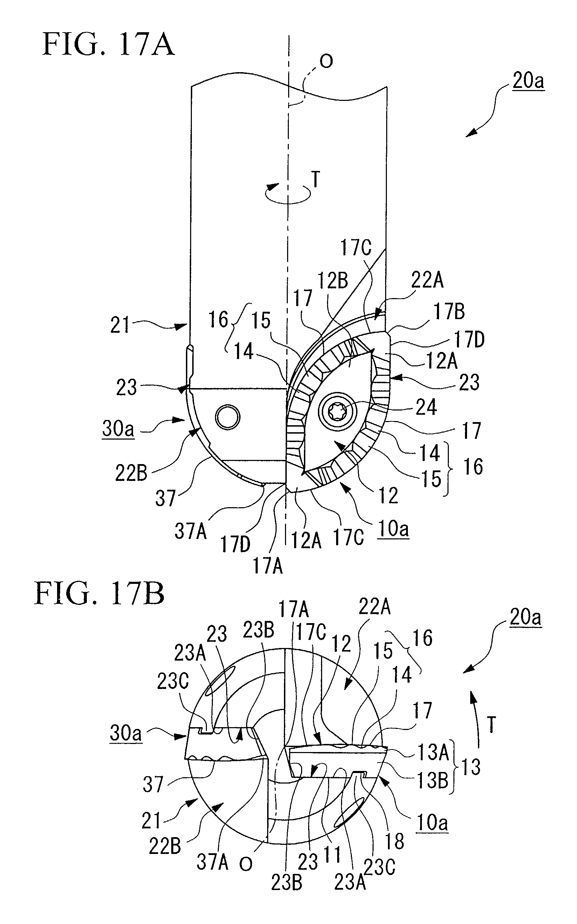

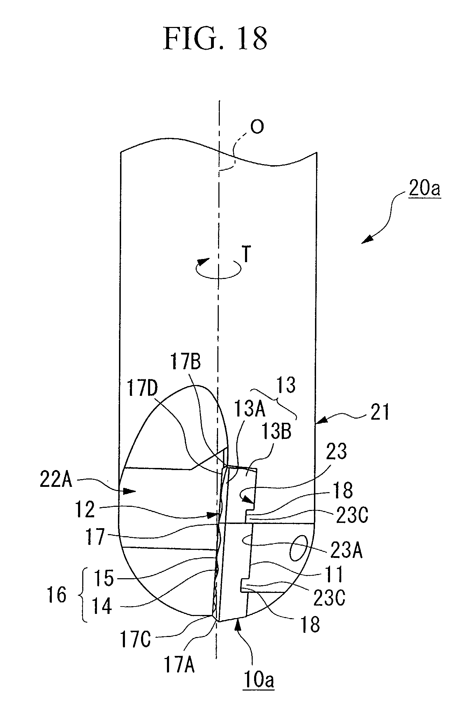

The insert 10a according to this third preferred embodiment of the present invention has the structure described above. Next, an indexable ball nose endmill which is equipped with a plurality of these inserts 10a will be explained with reference to FIGS. 17A, 17B, and 18; in the shown example this double edged mill is two edged and is fitted with two such inserts 10. FIG. 17A is a plan view of an indexable endmill to which this insert according to the third preferred embodiment of the present invention is fitted; FIG. 17B is an end on view thereof; and FIG. 18 is a side view of this indexable ball nose endmill.

This indexable ball nose endmill has the same structure as the indexable ball nose endmill tool described with reference to the first preferred embodiment of the present invention. In other words, a tool main body 20a is shaped as a cylinder which is rotated about its central rotational axis O, and a tip portion 21 of this tool main body 20a is shaped roughly as a hemisphere; and a pair of tip pockets 22A and 22B are formed upon the tip portion 21 as perpendicular cutaways as seen from the tip of the tool main body 20a, lying on opposite sides of its rotational axis O, with each of these tip pockets 22A and 22B being formed with a tip fitting seat 23 upon its wall surface which faces towards the rotational direction T of the tool.

Each of the tip fitting seats 23 is made up from a bottom surface 23A upon which keys 23C are formed, which is defined so as to intersect the outer circumferential surface of the tip portion 21 somewhat stepped backward against the rotational direction T from the wall surfaces of the tip pockets 22A and 22B, and a wall surface 23B which is approximately perpendicular to this bottom surface 23A. Furthermore, the bottom surfaces 23A are formed so as to incline backward against the rotational direction T in the direction of the base end of the tool main body.

This insert 10a of this third preferred embodiment is fitted to the tip fitting seat 23 of one of the tip pockets 22A by a clamping screw 24 which is passed through its through hole 19, so that its upper surface 12 faces in the forward rotational direction T, with the corner portion 17A of the leading end of one of its cutting edges 17 being positioned upon the rotational axis O, and with the side surface 13 which connects to its other cutting edge 17 being contacted against the wall surface 23B; and, from here, this one cutting edge 17 is arranged so as to extend to the outer circumference of the tool main body towards its base end, and moreover, the locus defined by this one of the cutting edges 17 as it rotates around the rotational axis O is roughly hemispherical. Furthermore, the keys 23C which are formed upon the bottom surface 23A of the tip fitting seat 23 are engaged with key grooves 18 which are formed upon the lower surface 11 of the insert 10a, and slippage of the insert 10a is prevented by this engagement.

At this time, the insert 10a is fitted to the tip fitting seat 23 so that the groove portions 14 and the ridge portions 15 of the serrations 16 which are formed upon the upper surface 12 of the insert 10a extend in a direction perpendicular to the rotational axis O of the tool, so that their angle of inclination θ with respect to the rotational axis O of the tool is 90°. Furthermore, the first sloping cutting edge 17C of the cutting edge 17 is set so that its axial rake angle is negative.

Moreover, upon the cutting edge 17, the axial rake of the portions between the ridge portions 15 and the groove portions 14 adjacent thereto towards the tip of the tool main body is set to be negative, while the axial rake of the portions between the ridge portions 15 and the groove portions 14 adjacent thereto towards the tool main body base end is set to be positive. In other words, the cutting edge 17 which presents the wavy shape is formed so as to have an axial rake which repeatedly is negative and positive alternately in the direction from the tip of the tool main body towards its base end.

Furthermore, an insert 30a which is fitted to the tip fitting seat 23 of the other tip pocket 22B is formed to be of roughly the same shape as the insert 10a of this third preferred embodiment, but somewhat smaller. With this insert 30a, as shown in FIGS. 17A and 17B, the corner portion 37A of the leading end of its cutting edge 37 is somewhat further positioned towards the outer circumference of the tool main body than the corner portion 17 of the leading end of the cutting edge 17 of the insert 10a of this third preferred embodiment, and its cutting edge 37 extends out to the outer circumference of the tool main body towards its base end, so that the locus defined by this cutting edge 37 as it rotates around the rotational axis O is positioned to overlap the locus defined by the cutting edge 17 of the insert 10a of the third preferred embodiment.

At this time, the position which the rotational trajectory around the rotational axis O of each of the groove portions 14 upon the cutting edge 17 of the insert 10a passes through is the same as the position which the rotational trajectory around the rotational axis O of each of the ridge portions 15 upon the cutting edge 37 of the insert 30a passes through, and moreover the position which the rotational trajectory around the rotational axis O of each of the ridge portions 15 upon the cutting edge 17 of the insert 10a passes through is the same as the position which the rotational trajectory around the rotational axis O of each of the groove portions 14 upon the cutting edge 37 of the insert 37a passes through.

Thus, when the cutting edge 17 is seen from the direction confronting the upper surface 12, this cutting edge 17 has a gentle wavy shape made up from the groove portions 14 and the ridge portions 15, since the side surface 13 of the insert 10a is a positive insert which is gradually inclined inwards from its upper surface 12 towards its lower surface 11. Accordingly, upon the surface of the work material which has been cut by the cutting edge 17 of the insert 10a which has this gentle wavy surface, a processed surface is formed which has the same gentle wavy shape made up from groove portions and ridge portions, but since the inserts 10a and 30a are fitted in the positions as described above, the ridge portions which remain upon the processed surface of the work material after cutting by the insert 10a come to be cut, during cutting by the insert 30a, by the ridge portions 15 of the cutting edge 37 of the insert 30a. As a result, the surface roughness of the processed surface of the work material is not reduced.

By forming upon the upper surface 12 the serrations 16 which are made up from the plurality of groove portions 14 and ridge portions 15, this insert 10a according to the third preferred embodiment of the present invention, having the structure as described above, is able to pare the chip away closely, because it is thus provided with the wavy shaped cutting edge 17, and due to the wavy shape of this cutting edge 17. Moreover, this same wavy shape is maintained over almost the entire length of the cutting edge 17, since the groove portions 14 and the ridge portions 15 extend in the direction perpendicular to the cutting edges 17, and at any position on this cutting edge 17 the wavy form of the cutting edge 17 is defined by their perpendicular intersection with it. Accordingly, in a case such as when performing the cutting process in various cutting directions, even if only a single portion of the cutting edge 17 is being utilized for the cut, this portion of the cutting edge 17 which is serving for this cut necessarily is formed in a wavy shape; and a result it is possible to pare away the chip in a stable manner, and the pared away chip is steadily rejected in a suitable fashion.

Furthermore, since the groove portions 14 of the serrations 16 are formed to be parallel with the lower surface 11, undesirable increase of the cutting resistance due to nicks or the like does not occur. In addition, the cutting resistance is even reduced, since the start timing of the cutting toward the work material are varied between the groove portions 14 and the ridge portions 15 of the cutting edge 17.

Yet further, another result of the fact that the groove portions 14 and the ridge portions 15 of the serrations 16 are defined by curved surfaces is that the strength of the cutting edges 17 is ensured by this wavy shape being defined, since the cutting edges 17, which are formed at the side ridge edge portion of the upper surface 12, also follow the wavy shape which is defined by these curved lines.

Furthermore, if the distance h in the thickness direction of the insert 10a between the bottoms 14A of the groove portions 14 and the summits 15A of the ridge portions 15 when the groove portions 14 and the ridge portions 15 are seen in cross section perpendicular to the direction in which they extend is too small, then the cutting edge 17 which is formed as a wavy shape by these groove portions 14 and ridge portions 15 undesirably becomes nearly a straight line, and there is a possibility that it may become impossible for the chip to be pared away by this cutting edge 17. On the other hand, if this distance h is too large, then the cutting edge 17 has a wavy shape with extremely great variation between its high and low portions, and there is a possibility that this may lead to deterioration of the strength of this cutting edge 17. By contrast to these extremes, since in this third preferred embodiment of the present invention the value of the distance h is set to be in the most suitable range of from 0.3 mm to 3.0 mm, thereby it is possible to obtain a cutting edge 17 whose strength is assured, and which also can pare away the chip stably and reliably.

Yet further, when in the same manner the groove portions 14 and the ridge portions 15 are seen in cross section perpendicular to the direction in which they extend, if the distance p between adjacent ones of the summits 15A of the ridge portions 15 is too small, then the cutting edge 17 is undesirably formed in a very small wavy shape. On the other hand, if this distance p is too great, then the cutting edge 17 has an extremely gentle wavy shape, and this will create a possibility that it cannot pare away the chip properly. By contrast to these extremes, since in this third preferred embodiment of the present invention the value of the distance p is set to be in the most suitable range of from 1.0 mm to 10.0 mm, thereby it is possible to ensure that the cutting edge 17 can pare away the chip stably and reliably.

Moreover, when in the same manner the groove portions 14 and the ridge portions 15 are seen in cross section perpendicular to the direction in which they extend, if the respective radiuses of curvature a and b of the groove portions 14 and the ridge portions 15 which define the curved cross sectional shape are too small, then the cutting edge 17 whose wavy shape is defined by these groove portions 14 and ridge portions 15 also has this same shape, and as a result there is a possibility that it may become impossible to ensure a sufficient strength for this cutting edge 17, since the groove portions 14 and the ridge portions 15 become too sharp. On the other hand, if these radiuses of curvature a and b are too great, then the performance for paring away the chip is deteriorated, since the cutting edge 17 is formed in a wavy shape which is very gentle. By contrast to these extremes, in this third preferred embodiment of the present invention, by forming the curvilinear cross sectional shape with the radiuses a and b of the groove portions 14 and the ridge portions 15 being in the most suitable range of from 1.0 mm to 10.0 mm, thereby it is possible to assure the strength of the cutting edge 17, and to ensure that it can maintain a good performance for paring away the chip.

Furthermore, the first sloping cutting edges 17C which are positioned at the corner portions 17A of the leading ends of the cutting edges 17 come to be defined upon the upper surface 12, since the sloping surfaces 12A are formed upon the upper surface 12. As a result, it is possible to maximize the inclined angle of the tip portion of the cutting edge 17 whose circumferential speed is small and which receives a great cutting load. Moreover the rigidity of the insert 10a is increased, since no serrations 16 are formed upon the upper surface 12 of the portions of the insert 10a which are made to be very thin due to the sloping surfaces 12A. However, although in this third preferred embodiment of the present invention the sloping surfaces 12A are formed at both end side portions in the longitudinal direction of the upper surface 12 of the insert 10a, it would alternatively be acceptable not to form these sloping surfaces 12A, if it is possible to ensure that the thickness of the insert 10a is sufficient.

Furthermore although, in this third preferred embodiment, when the groove portions 14 and the ridge portions 15 are seen in cross section perpendicular to the direction in which they extend, the absolute value of the angle of inclination α with respect to the lower surface 11 of the tangent line S1 at the intersection portion X1 between a ridge portion 15 and the groove portion 14 adjacent thereto towards the tip of the tool main body, and the absolute value of the angle of inclination β with respect to the lower surface 11 of the tangent line S2 at the intersection portion X2 between a ridge portion 15 and the groove portion 14 adjacent thereto towards the base of the tool main body, are equal to one another, it would also be possible, as an alternative, for these angles of inclination α and β to be different from one another.

For example, in the same manner as shown in the first variant of the first preferred embodiment of the present invention shown in FIG. 8, it would also be acceptable to form the serrations 16 so that the absolute value of the angle of inclination α with respect to the lower surface 11 of the tangent line S1 at the intersection portion X1 between a ridge portion 15 and the groove portion 14 adjacent thereto towards the tip of the tool main body (the left side in FIG. 8), is greater than the absolute value of the angle of inclination β with respect to the lower surface 11 of the tangent line S2 at the intersection portion X2 between a ridge portion 15 and the groove portion 14 adjacent thereto towards the base of the tool main body (the right side in FIG. 8).

When this type of structure is employed, the portion between a ridge portion 15 upon the cutting edge 17 and the groove portion 14 adjacent thereto towards the tip of the tool main body, in other words, when the insert 10a is fitted to the tool main body 20a, the length of the cutting edge 17, which is set at a negative axial rake, becomes smaller. Furthermore, the portion between a ridge portion 15 upon the cutting edge 17 and the groove portion 14 adjacent thereto towards the base of the tool main body, in other words, when the insert 10a is fitted to the tool main body 20a, the length of the cutting edge 17 which is set at a positive axial rake, becomes greater. As a result, the sharpness of the cutting edge 17 which is formed in a wavy shape is enhanced.

Furthermore it would be possible, as an alternative, not as in the third preferred embodiment described above to form the cutting edges 17 by the wavy shapes which connect together the groove portions 14 and ridge portions 15 of the serrations 16 which are each formed as curved surfaces, but instead to make the portions where the groove portions 14 and the ridge portions 15 meet one another as planes, so that, in a cross section perpendicular to the direction in which the groove portions 14 and the ridge portions 15 extend, the curvilinear shapes of the groove portions 14 and the curvilinear shapes of the ridge portions 15 are smoothly connected together by straight line portions.

For example, in the same manner as shown in the second variant of the first preferred embodiment of the present invention shown in FIG. 9, it would be acceptable to connect together the groove portions 14 and the ridge portions 15 of the serrations 16 in the above described first variant embodiment by straight line portions 16A. If this structure is employed, it is possible to obtain a cutting edge 17 of a wavy shape which has the most suitable characteristics in a hypothetical cutting situation. It should be understood that the tangent lines S2 in this type of case are the same as the straight line portions 16A which connect the groove portions 14 and the ridge portions 15.

As another alternative, it would also be possible to form the groove portions 14 and the ridge portions 15 of the serrations 16, not as being parallel to the lower surface 11, but rather in a sloping direction which approaches towards the lower surface 11 along with increasing distance from the cutting edge 17, or in the opposite direction which recedes away from the lower surface 11 along with increasing distance from the cutting edge 17. This kind of case will now be explained with reference to the fourth preferred embodiment of the present invention.

### FOURTH EMBODIMENT

Next, a fourth preferred embodiment of the present invention will be explained; again, in this explanation, to portions which are identical to portions of the first preferred embodiment described above and/or which have the same functions, the same reference symbols will be appended, and their description will be curtailed.

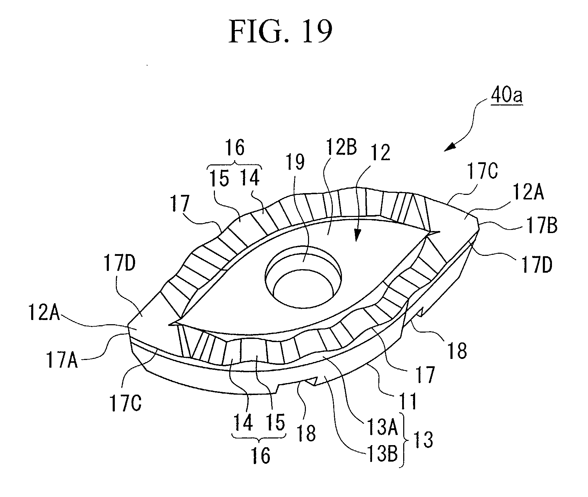

FIG. 19 is a perspective view of an insert according to this fourth preferred embodiment.

An insert 40a according to the fourth preferred embodiment has the same structure as the insert according to the third preferred embodiment described above, except that it differs in the point that the groove portions 14 and the ridge portions 15 of the serrations 16 are inclined with respect to the lower surface 11. In other words, as seen in FIG. 19, the groove portions 14 and the ridge portions 15 which constitute the serrations 16 are inclined in a direction to approach towards the lower surface 11 along with increasing distance from the cutting edge 17, and their angles of inclination with respect to the lower surface 11 are set to +7º, thus yielding a positive rake angle with respect to the cutting edge 17. It should be understood that, for this angle of inclination, the direction of approaching towards the lower surface 11 along with increasing distance from the cutting edge 17 is taken as positive, while the direction of receding away from the lower surface 11 along with increasing distance from the cutting edge 17 is taken as negative. In other words, the direction which yields a positive rake angle to the cutting edge 17 is taken as positive, while the direction which yields a negative rake angle to the cutting edge 17 is taken as negative.

According to this insert 40a of the fourth preferred embodiment, in addition to the various beneficial effects obtained as described above with reference to the previous preferred embodiments, a positive rake angle to the cutting edge 17 is obtained by inclining the groove portions 14 and the ridge portions 15 in directions which approach towards the lower surface 11 along with increasing distance from the cutting edge 17, and as a result the sharpness of the cutting edge 17 is preserved as is desirable, and it is possible to maintain a stabilized cutting state. It should be understood that, in consideration of the strength of the cutting edge, this angle of inclination should desirably be set to be less than or equal to +15º.

Furthermore, as described above, it is of course possible to impart a negative rake angle to the cutting edge 17 by arranging for the groove portions 14 and the ridge portions 15, not to incline in directions which approach towards the lower surface 11 along with increasing distance from the cutting edge 17, but to incline in directions which recede away from the lower surface 11 along with increasing distance from the cutting edge 17. In this case, in consideration of the strength of the cutting edge, this angle of inclination should desirably be set to be greater than or equal to -10°.

Yet further, in this fourth preferred embodiment of the present invention as well, it is of course possible to incorporate the same variations for the shape of the cutting edge 17 as shown in FIGS. 8 and 9 in connection with the first and second variant embodiments of the first preferred embodiments described above.

Moreover, it should be understood that the shapes of the plurality of groove portions 14 and ridge portions 15 which make up the serrations 16 are not to be considered as being limited to those explained above with reference to the third and fourth preferred embodiments; any shapes which yield a cutting edge 17 which is capable of paring away the chip properly will be acceptable. Furthermore, in the third and fourth preferred embodiments, the shape of the insert is not limited to the use of an insert which is roughly spindle shaped and upon which a pair of cutting edges 17 are formed; it is alternatively possible to use an insert upon which only a single cutting edge is formed on one side thereof.

### FIFTH EMBODIMENT

Next, a fifth preferred embodiment of the present invention will be explained; again, in this explanation, to portions which are identical to portions of the first preferred embodiment described above and/or which have the same functions, the same reference symbols will be appended, and their description will be curtailed.

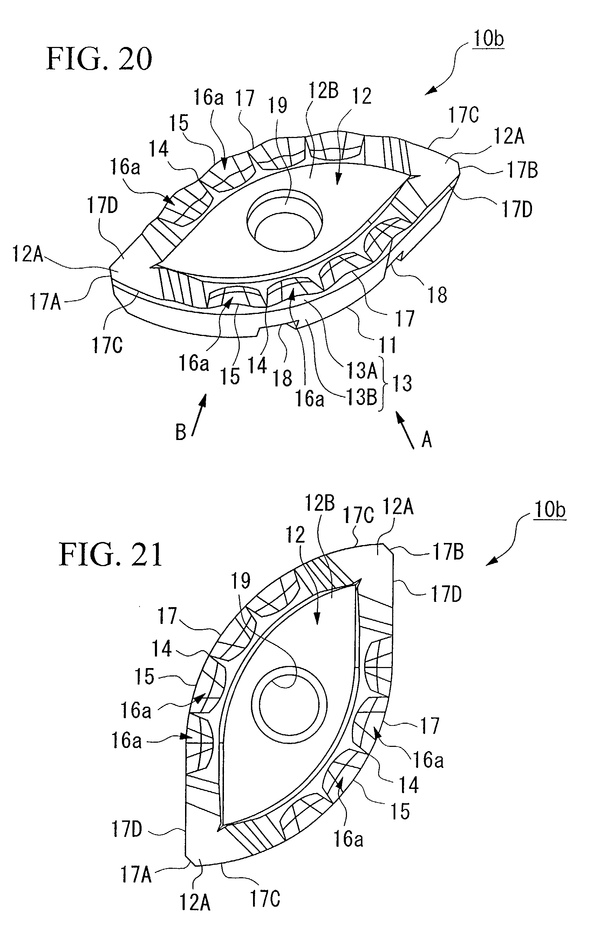

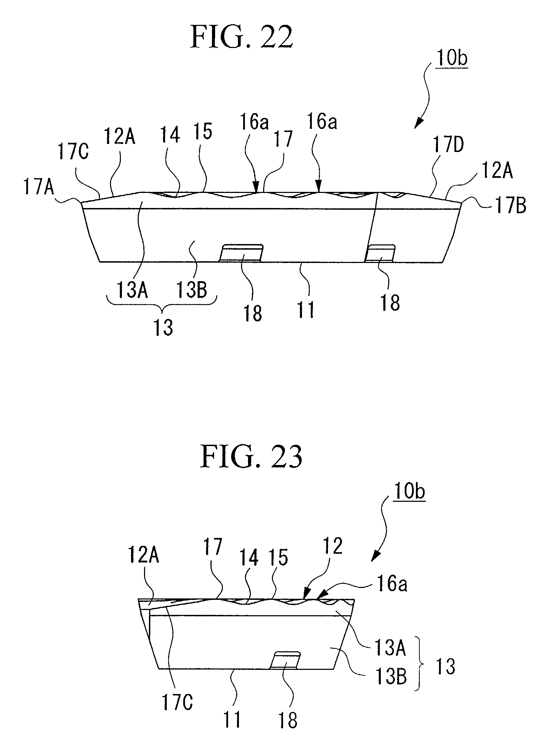

FIG. 20 is a perspective view of an insert according to this fifth preferred embodiment of the present invention; FIG. 21 is a plan view thereof; FIG. 22 is a side view of this insert as seen in the direction shown in FIG. 20 by the arrow A; and FIG. 23 is a side view of this insert as seen in the direction shown in FIG. 20 by the arrow B.

An insert 10b of this fifth preferred embodiment, just like the insert 10 of the first preferred embodiment described above, is made from a hard material such as cemented carbide or the like, and, as shown in FIGS. 20 through 23, is roughly shaped in a spindle shape; moreover, as before, it is formed as a positive insert, with its side surface 13 being gradually inclined outwards from its lower surface 11 towards its upper surface 12.

Furthermore, along with the region upon the upper surface 12 around a through hole 19 in the central portion thereof being formed as a planar surface 12B which is parallel to the lower surface 11, in the region peripheral to this planar surface 12B, with the exception of sloping surfaces 12A. In other words, in the vicinity of the cutting edges 17 which are defined at the side ridge edge portions of the upper surface 12, a plurality of dimpled portions 16a which project from the lower surface 11 towards the upper surface 12 are formed roughly following along arcs , so as to define cutting edges 17. This plurality of dimpled portions 16a are arranged at roughly equal intervals, and moreover are formed so as to intersect the cutting edges 17. Furthermore, the dimpled portions 16a are each formed as a smoothly curved surface, and neighboring ones of these dimpled portions 16a are mutually connected together by smooth surfaces.

Moreover, along with the summit portions of the dimpled portions 16a (i.e. the summits 15A of ridge portions 15 which will be described hereinafter) being positioned upon a cutting edge 17, these dimpled portions 16a are slopingly connected to the upper surface 12 so as gradually to approach said upper surface 12 along with increasing distance from this cutting edge 17. It should be understood that the portions of the upper surface 12 which are located between each of the dimpled portions 16a are formed so as to be parallel with the lower surface 11.

Yet further, the width of each of the dimpled portions 16a, in other words, its length along the direction in which its cutting edge 17 extends, gradually becomes smaller along with increase of distance from that cutting edge 17, and as a result, the widths (i.e. their lengths in the direction in which the cutting edges 17 extend) of the portions of the upper surface 12 which are positioned between adjacent ones of the dimpled portions 16 (i.e. of the portions of the upper surface 12 which connect together groove portions 14 of the cutting edges 17 which will be described hereinafter) gradually increase along with increase of distance from that cutting edge 17.

And the result of this type of plurality of dimpled portions 16a being formed so as to intersect the cutting edges 17 is that the entire lengths of the cutting edges 17 (the cutting edges 17, with the exception of the first sloping cutting edge 17C and the second sloping cutting edge 17D), when seen from the side surface, as shown in FIGS. 22 and 23, present a wavy shape which is defined by a plurality of groove portions 14 and ridge portions 15 which are formed as smooth curves and are disposed alternatingly.

Here, the forms of the cutting edges 17 which present these wavy shapes due to the groove portions 14 and the ridge portions 15 which constitute the dimpled portions 16a are the same as those in the case of the first preferred embodiment, shown in the above FIG. 5. In other words, the ridge portions 15 are formed as curves convex from the lower surface 11 towards the upper surface 12 and of radius of curvature a, while the groove portions 14 are formed as curves concave from the upper surface 12 towards the lower surface 11 and of radius of curvature b. And the groove portions 14 and ridge portions 15 which are defined by these curves are connected smoothly together, and thereby in cross section define the wavy forms of the cutting edges 17.

In this case, the radius of curvature a of the ridge portions 15 is set in the range from 1.0 mm to 10.0 mm, while the radius of curvature b of the groove portions 14 is likewise set in the range from 1.0 mm to 10.0 mm, and moreover these radiuses of curvature satisfy the relationship a>b.

Furthermore, the distance h between the summits 15A of the ridge portions 15 and the bottoms 14A of the groove portions 14 in the thickness direction of the insert 10b, in other words, in the direction perpendicular to its lower surface 11, is set in the range from 0.3 mm to 3.0 mm.

Yet further, the distance p between the summits 15A of adjacent ridge portions 15, in other words, the pitch of the ridge portions 15, is set in the range from 1.0 mm to 10.0 mm. It will be understood that the distance between the bottoms 14A of adjacent groove portions 14 is the same as this distance p between the summits 15A of adjacent ridge portions 15.

Moreover, the absolute value of the angle of inclination α which the tangent line S1 to the intersection portion X1 between a ridge portion 15 and the adjacent one of the groove portions 14 towards the leading end corner portion 17A side of its cutting edge 17 subtends with respect to the lower surface 11 (α <0° if the direction of inclination so as to become farther spaced away from the lower surface 11 as the tip corner portion 17A side [the tool main body tip side when the insert 10b is fitted to a tool main body 20a which will be described hereinafter] of this one of the cutting edges 17 is approached is taken as positive), and the absolute value of the angle of inclination âwhich the tangent line S2 to the intersection portion X2 between the ridge portion 15 and the adjacent one of the groove portions 14 towards the base corner portion 17B side (the tool main body base side when the insert 10b is fitted to the tool main body 20a which will be described hereinafter) of that one of the cutting edges 17 subtends with respect to the lower surface 11 (where β >0°), are the same (so that α =-β). In other words, along with the ridge portions 15 being formed symmetrically about their summits 15A, the groove portions 14 are also formed symmetrically about their bottoms 14A.

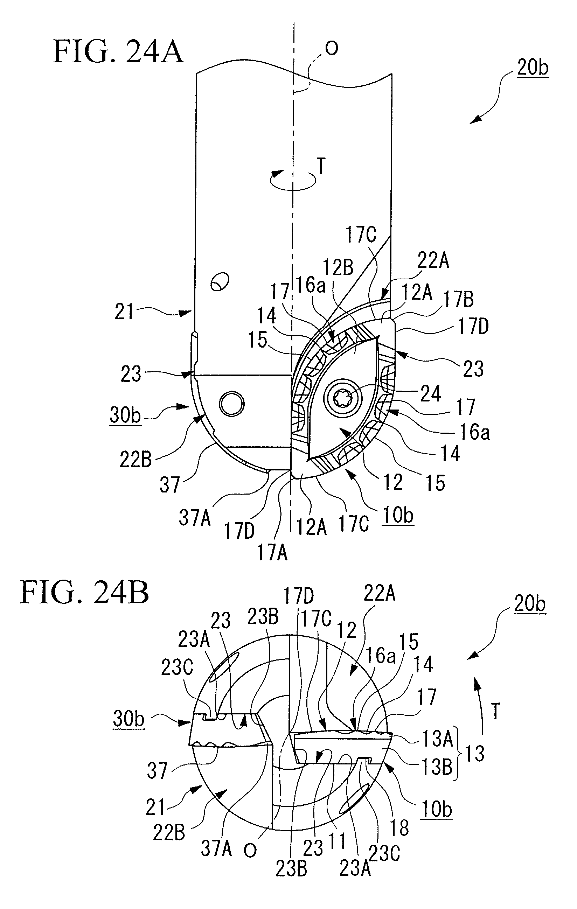

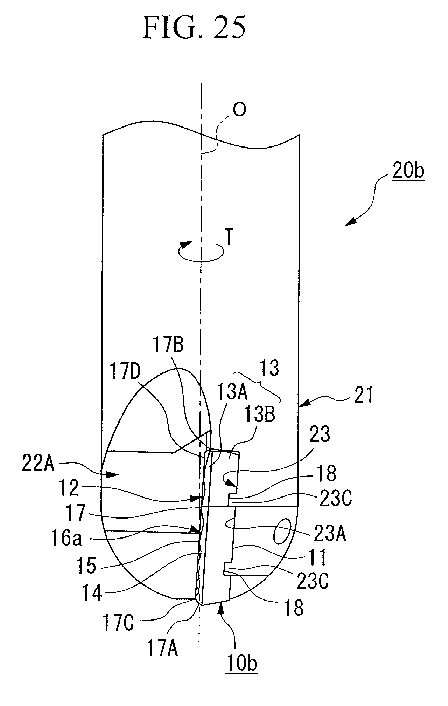

The insert 10b according to this fifth preferred embodiment of the present invention has the structure described above. Next, an indexable ball nose endmill which is equipped with a plurality of these inserts 10b will be explained with reference to FIGS. 24A, 24B, and 25; in the shown example this mill is double edged and is fitted with two such inserts 10b. FIG. 24A is a plan view of this indexable ball nose endmill to which this insert according to the fifth preferred embodiment of the present invention is fitted; FIG. 24B is an end on view of this mill; and FIG. 25 is a side view thereof.

This indexable ball nose endmill has the same structure as the indexable ball nose endmill tool described with reference to the first preferred embodiment of the present invention. In other words, a tool main body 20b is shaped as a cylinder which is rotated about its central rotational axis O, and a tip portion 21 of this tool main body 20b is shaped roughly as a hemisphere; and a pair of tip pockets 22A and 22B are formed upon this tip portion 21 as perpendicular cutaways as seen from the tip of the tool main body 20b, lying on opposite sides of its rotational axis O, with each of these tip pockets 22A and 22B being formed with a tip fitting seat 23 upon its wall surface which faces towards the rotational direction T of the tool.

Each of the tip fitting seats 23 is made up from a bottom surface 23A upon which keys 23C are formed, which is defined so as to intersect the outer circumferential surface of the tip portion 21 somewhat stepped backward against the rotational direction T from the wall surfaces of the tip pockets 22A and 22B, and a wall surface 23B which is approximately perpendicular to this bottom surface 23A. Furthermore, the bottom surfaces 23A are formed so as to incline backward against the rotational direction T in the direction of the base end of the tool main body.

This insert 10b of this fifth preferred embodiment is fitted to the tip fitting seat 23 of one of the tip pockets 22A by a clamping screw 24 which is passed through its through hole 19, so that its upper surface 12 faces in the forward rotational direction T, with the corner portion 17A of the leading end of one of its cutting edges 17 being positioned upon the rotational axis O, and with the side surface 13 which connects to its other cutting edge 17 being contacted against the wall surface 23B; and, from here, this one cutting edge 17 is arranged so as to extend to the outer circumference of the tool main body towards its base end, and moreover, the locus defined by this one of the cutting edges 17 as it rotates around the rotational axis O is roughly hemispherical. Furthermore, the keys 23C which are formed upon the bottom surface 23A of the tip fitting seat 23 are engaged with key grooves 18 which are formed upon the lower surface 11 of the insert 10b, and slippage of the insert 10b is prevented by this engagement.

At this time, the insert 10b is fitted to the tip fitting seat 23 so that the dimpled portions 16a which are made up by the plurality of groove portions 14 and ridge portions 15 in the neighborhood of this one of the cutting edges 17 of the insert 10b are roughly equidistant from the center of the hemispherical shape which is defined by the rotational locus of this one cutting edge 17. Furthermore, the first sloping cutting edge 17C of the cutting edge 17 is set so that its axial rake angle is negative.

Moreover, upon the cutting edge 17, the axial rake of the portions between the ridge portions 15 and groove portions 14 adjacent thereto towards the tip of the tool main body is set to be negative, while the axial rake of the portions between the ridge portions 15 and the groove portions 14 adjacent thereto towards the base of the tool main body base end is set to be positive. In other words, the cutting edge 17 which presents the wavy shape is formed so as to have an axial rake which repeatedly is negative and positive alternately in the direction from the tip of the tool main body towards its base end.

Furthermore, the insert 30b which is fitted to the tip fitting seat 23 of the other tip pocket 22B is formed to be of roughly the same shape as the insert 10b of this fifth preferred embodiment, but somewhat smaller. With this insert 30b, as shown in FIGS. 24A and 24B, the corner portion 37A of the leading end of its cutting edge 37 is somewhat further positioned towards the outer circumference of the tool main body than the corner portion 17 of the leading end of the cutting edge 17 of the insert 10b of this fifth preferred embodiment, and its cutting edge 37 extends out to the outer circumference of the tool main body towards its base end, so that the locus defined by this cutting edge 37 as it rotates around the rotational axis O is positioned to overlap the locus defined by the cutting edge 17 of the insert 10b of the fifth preferred embodiment.

At this time, the position which the rotational trajectory around the rotational axis O of each of the groove portions 14 upon the cutting edge 17 of the insert 10b passes through is the same as the position which the rotational trajectory around the rotational axis O of each of the ridge portions 15 upon the cutting edge 37 of the insert 30b passes through, and moreover the position which the rotational trajectory around the rotational axis O of each of the ridge portions 15 upon the cutting edge 17 of the insert 10b passes through is the same as the position which the rotational trajectory around the rotational axis O of each of the groove portions 14 upon the cutting edge 37 of the insert 30b passes through.

Thus, when the cutting edge 17 is seen from the direction confronting the upper surface 12, this cutting edge 17 has a gentle wavy shape made up from the groove portions 14 and the ridge portions 15, since the side surface 13 of the insert 10b is a positive insert which is gradually inclined inwards from its upper surface 12 towards its lower surface 11. Accordingly, upon the surface of the work material which has been cut by the cutting edge 17 of the insert 10b which has this gentle wavy surface, a processed surface is formed which has the same gentle wavy shape made up from groove portions and ridge portions, but since the inserts 10b and 30b are fitted in the positions as described above, the ridge portions which remain upon the processed surface of the work material after cutting by the insert 10b come to be cut, during cutting by the insert 30b, by the ridge portions 15 of the cutting edge 37 of the insert 30b. As a result, the surface roughness of the processed surface of the work material is not reduced.

By forming upon the upper surface 12 the dimpled portions 16a which are made up from the plurality of groove portions 14 and ridge portions 15, this insert 10b according to the fifth preferred embodiment of the present invention, having the structure as described above, is able to pare the chip away closely, because it is thus provided with the wavy shaped cutting edge 17, and due to the wavy shape of this cutting edge 17. Moreover, this same wavy shape is maintained over almost the entire length of the cutting edge 17, since the wavy shape of the cutting edge 17 is formed by positioning the plurality of dimpled portions 16a to intersect this cutting edge 17 at roughly equal intervals. Accordingly, in a case such as when performing the cutting process in various cutting directions, even if only a single portion of the cutting edge 17 is being utilized for the cut, this portion of the cutting edge 17 which is serving for this cut necessarily is formed in a wavy shape; and a result it is possible to pare away the chip in a stable manner, and the pared away chip is steadily rejected in a suitable fashion.

Furthermore, since the portions of the upper surface 12 which connect to the groove portions 14 of the cutting edge 17 are formed to be parallel with the lower surface 11, undesirable increase of the cutting resistance due to nicks or the like does not occur. In addition, the cutting resistance is even reduced, since the start timing of the cutting toward the work material are varied between the groove portions 14 and the ridge portions 15 of the cutting edge 17.

Furthermore, the ridge portions 15 of the cutting edge 17 are imparted with a positive rake angle, since the ridge portions 15 of the cutting edge 17 are defined by the dimpled portions 16a which project from the upper surface 12, and the surfaces of the dimpled portions 16a which connect to the ridge portions 15 of this cutting edge 17 are inclined so as to approach towards the lower surface 11 along with increasing distance from the cutting edge 17. As a result, it is possible to maintain the sharpness of the cutting edge 17 at a desirable level, and it is possible to continue the cutting state in a stable manner. In particular a prominent benefit is obtained by the portions on the cutting edge 17 between the ridge portions 15 and the adjacent groove portions 14 towards the tip of the tool main body, which are set at a negative axial rake.

At this time, the rake angle of the cutting edge 17 which is imparted to the cutting edge 17 which has a wavy shape becomes a maximum at the summits 15A of the ridge portions 15 upon the cutting edge 17, and becomes a minimum (0°) at the bottoms 14A of the groove portions 14 upon the cutting edge 17. It should be understood that it would also be possible to impart an inclination to the portions of the upper surface 12 which connect the groove portions 14 on the cutting edge 17, so as to approach the lower surface 11 along with increasing distance from the cutting edge 17, and also to impart a positive rake angle to the groove portions 14 of the cutting edge 17.

Yet further, another result of the fact that the groove portions 14 and the ridge portions 15 of the cutting edges 17 are defined by curved surfaces is that the strength of the cutting edges 17 is ensured by this wavy shape being defined, since the cutting edges 17, which are formed at the side ridge edge portions of the upper surface 12, also follow the wavy shape which is defined by these curved lines.

Moreover the strength of the cutting edge 17 is ensured, since, along with forming the dimpled portions 16a by smooth surfaces so as to project, the result of connecting between the dimpled portions 16a by curved surfaces is that the cutting edge 17 which is formed upon the ridge portions of the upper surface 12 and the side surface 13 is also made as a wavy shape which is built up from curved lines.

Furthermore, if the distance h in the thickness direction of the insert 10b between the bottoms 14A of the groove portions 14 and the summits 15A of the ridge portions 15 when the groove portions 14 and the ridge portions 15 are seen in cross section perpendicular to the direction in which they extend is too small, then the cutting edge 17 which is formed as a wavy shape by these groove portions 14 and ridge portions 15 undesirably becomes nearly a straight line, and there is a possibility that it may become impossible for the chip to be pared away by this cutting edge 17. On the other hand, if this distance h is too large, then the cutting edge 17 has a wavy shape with extremely great variation between its high and low portions, and there is a possibility that this may lead to deterioration of the strength of this cutting edge 17. By contrast to these extremes, since in this fifth preferred embodiment of the present invention the value of the distance h is set to be in the most suitable range of from 0.3 mm to 3.0 mm, thereby it is possible to obtain a cutting edge 17 whose strength is assured, and which also can pare away the chip stably and reliably.

Yet further, when in the same manner the groove portions 14 and the ridge portions 15 are seen in cross section perpendicular to the direction in which they extend, if the distance p between adjacent ones of the summits 15A of the ridge portions 15 is too small, then the cutting edge 17 is undesirably formed in a very small wavy shape; while on the other hand, if this distance p is too great, then the cutting edge 17 has an extremely gentle wavy shape, and this will create a possibility that it cannot pare away the chip properly. By contrast to these extremes, since in this fifth preferred embodiment of the present invention the value of the distance p is set to be in the most suitable range of from 1.0 mm to 10.0 mm, thereby it is possible to ensure that the cutting edge 17 can pare away the chip stably and reliably.

Moreover, when in the same manner the groove portions 14 and the ridge portions 15 are seen in cross section perpendicular to the direction in which they extend, if the respective radiuses of curvature a and b of the groove portions 14 and the ridge portions 15 which define the curved cross sectional shape are too small, then the cutting edge 17 whose wavy shape is defined by these groove portions 14 and ridge portions 15 also has this same shape, and as a result there is a possibility that it may become impossible to ensure a sufficient strength for this cutting edge 17, since the groove portions 14 and the ridge portions 15 become too sharp. On the other hand, if these radiuses of curvature a and b are too great, then the performance for paring away the chip is deteriorated, since the cutting edge 17 is formed in a wavy shape which is very gentle. By contrast to these extremes, in this fifth preferred embodiment of the present invention, by forming the curvilinear cross sectional shape with the radiuses a and b of the groove portions 14 and the ridge portions 15 being in the most suitable range of from 1.0 mm to 10.0 mm, thereby it is possible to assure the strength of the cutting edge 17, and to ensure that it can maintain a good performance for paring away the chip.

Furthermore, the first sloping cutting edges 17C which are positioned at the corner portions 17A of the leading ends of the cutting edges 17 come to be defined upon the upper surface 12, since the sloping surfaces 12A are formed upon the upper surface 12. As a result, it is possible to maximize the inclined angle of the tip portion of the cutting edge 17 whose circumferential speed is small and which receives a great cutting load. Moreover the rigidity of the insert 10b is increased, since no dimpled portions 16a are formed upon the upper surface 12 of the portions of the insert 10b which are made to be very thin due to the sloping surfaces 12A. However, although in this fifth preferred embodiment of the present invention the sloping surfaces 12A are formed at both end side portions in the longitudinal direction of the upper surface 12 of the insert 10b, it would alternatively be acceptable not to form these sloping surfaces 12A, if it is possible to ensure that the thickness of the insert 10b is sufficient.

Furthermore although, in this fifth preferred embodiment, when the groove portions 14 and the ridge portions 15 are seen in cross section perpendicular to the direction in which they extend, the absolute value of the angle of inclination α with respect to the lower surface 11 of the tangent line S1 at the intersection portion X1 between a ridge portion 15 and the groove portion 14 adjacent thereto towards the tip of the tool main body, and the absolute value of the angle of inclination β with respect to the lower surface 11 of the tangent line S2 at the intersection portion X2 between a ridge portion 15 and the groove portion 14 adjacent thereto towards the base of the tool main body, are equal to one another, it would also be possible, as an alternative, for these angles of inclination α and β to be different from one another.

For example, in the same manner as shown in the first variant of the first preferred embodiment of the present invention shown in FIG. 8, it would also be acceptable to form the dimpled portions 16a so that the absolute value of the angle of inclination α with respect to the lower surface 11 of the tangent line S1 at the intersection portion X1 between a ridge portion 15 and the groove portion 14 adjacent thereto towards the tip of the tool main body (the left side in FIG. 8), is greater than the absolute value of the angle of inclination β with respect to the lower surface 11 of the tangent line S2 at the intersection portion X2 between a ridge portion 15 and the groove portion 14 adjacent thereto towards the base of the tool main body (the right side in FIG. 8).

When this type of structure is employed, the portion between a ridge portion 15 upon the cutting edge 17 and the groove portion 14 adjacent thereto towards the tip of the tool main body, in other words, when the insert 10b is fitted to the tool main body 20b, the length of the cutting edge 17, which is set at a negative axial rake, becomes smaller. Furthermore, the portion between a ridge portion 15 upon the cutting edge 17 and the groove portion 14 adjacent thereto towards the base of the tool main body, in other words, when the insert 10b is fitted to the tool main body 20b, the length of the cutting edge 17 which is set at a positive axial rake, becomes greater. As a result, the sharpness of the cutting edge 17 which is formed in a wavy shape is enhanced.

Furthermore it would be possible, as an alternative, not as in the fifth preferred embodiment described above to form the cutting edges 17 by the wavy shapes which connect together the groove portions 14 and ridge portions 15 of the dimpled portions 16a which are each formed as curved surfaces, but instead to make the portions where the groove portions 14 and the ridge portions 15 meet one another as planes, so that, in a cross section perpendicular to the direction in which the groove portions 14 and the ridge portions 15 extend, the curvilinear shapes of the groove portions 14 and the curvilinear shapes of the ridge portions 15 are smoothly connected together by straight line portions.

For example, in the same manner as shown in the second variant of the first preferred embodiment of the present invention shown in FIG. 9, it would be acceptable to connect together the groove portions 14 and the ridge portions 15 of the dimpled portions 16a in the above described first variant embodiment by straight line portions 16A. If this structure is employed, it is possible to obtain a cutting edge 17 of a wavy shape which has the most suitable characteristics in a hypothetical cutting situation. It should be understood that the tangent lines S2 in this type of case are the same as the straight line portions 16A which connect the groove portions 14 and the ridge portions 15.

Moreover, it should be understood that the shapes of the dimpled portions 16a are not to be considered as being limited to those explained above with reference to the fifth preferred embodiment; any shapes for these dimpled portions which yield a cutting edge 17 having a wavy shape which is capable of paring away the chip properly will be acceptable. Furthermore, the shape of the insert is not limited to the use of an insert which is roughly shaped in a spindle shape and upon which a pair of cutting edges 17 are formed; it would alternatively be possible to use an insert upon which only a single cutting edge is formed on one side thereof.

### SIXTH EMBODIMENT

Next, a sixth preferred embodiment of the present invention will be explained; again, in this explanation, to portions which are identical to portions of the first preferred embodiment described above and/or which have the same functions, the same reference symbols will be appended, and their description will be curtailed.

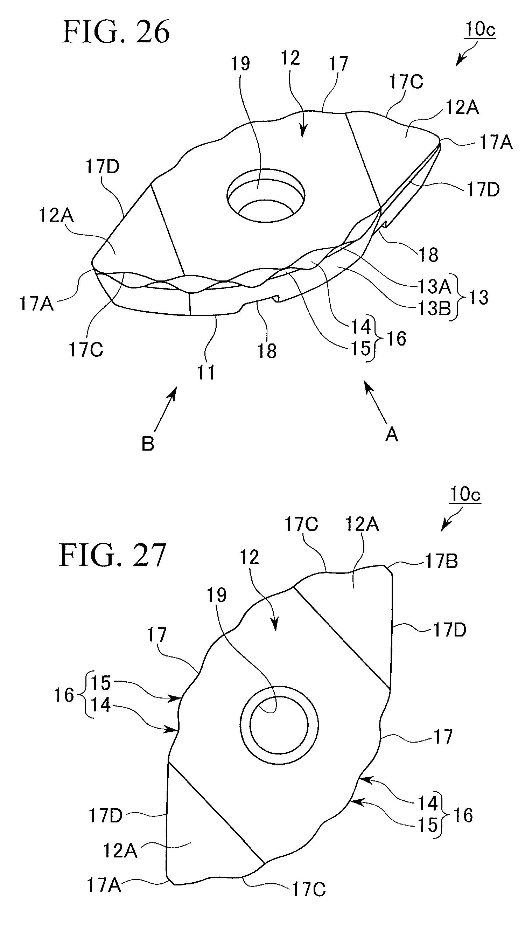

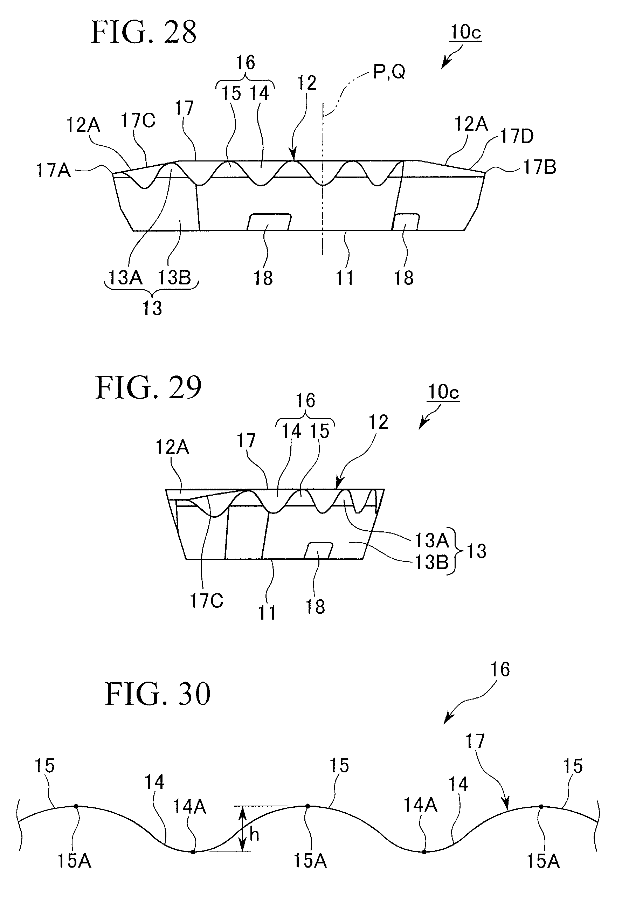

FIG. 26 is a perspective view of an insert according to this sixth preferred embodiment of the present invention; FIG. 27 is a plan view of the upper surface thereof; FIG. 28 is a side view of this insert as seen in the direction shown in FIG. 26 by the arrow A; and FIG. 29 is a side view thereof as seen in the direction shown in FIG. 26 by the arrow B.

The insert 10c of this sixth preferred embodiment, just like the insert 10 of the first preferred embodiment described above, is made from a hard material such as cemented carbide or the like, and, as shown in FIGS. 26 through 20, is roughly shaped in a spindle shape; moreover, as before, it is formed as a positive insert, with its side surface 13 being gradually inclined outwards from its lower surface 11 towards its upper surface 12.

Furthermore, a plurality of groove portions 14 and ridge portions 15 are formed as arranged alternatingly upon the side surface 13 with the exception of a second escape surface 13B, in other words upon a first escape surface 13A which connects to the cutting edge 17, so as to define a plurality of serrations 16. This plurality of groove portions 14 and ridge portions 15 are arranged at roughly equal intervals, and moreover are formed so as to be mutually parallel. It should be understood that no serrations 16 are formed upon the first escape surface 13A which connects to the second sloping cutting edge 17D.

Moreover, the serrations 16 are formed so that, when seen in the direction of the first escape surface 13A, as shown in FIG. 28, the direction P in which the groove portions 14 and the ridge portions 15 extend is inclined with respet to the direction Q perpendicular to the upper surface 12 by an angle whose absolute value is in the range less than or equal to 10°. In this sixth preferred embodiment of the present invention, the serrations 16 are formed so that the direction P in which the groove portions 14 and the ridge portions 15 extend and the direction Q perpendicular to the upper surface 12 are the same (have a 0° angle of mutual inclination).

Yet further, the plurality of groove portions 14 and ridge portions 15 which make up the serrations 16 are each formed as a smoothly curved surface, and they are mutually smoothly connected together. Furthermore, the plurality of groove portions 14 and ridge portions 15 of the serrations 16 are provided so as to connect to the roughly arcuate cutting edge 17 which is formed upon the ridge portion of the upper surface 12 and the first escape surface 13A. As a result, the entire length of the cutting edge 17 (the cutting edge 17, with the exception of the second sloping cutting edge 17D) presents, when seen in frontal view, a wavy shape which is defined as a smooth curve, as shown in FIGS. 26 and 27.

Furthermore, the first escape surface 13A and the second escape surface 13B which constitute the side surface 13, along with being inclined inwards from the upper surface 12 towards the lower surface 13, are set so that the inclination of the second escape surface 13B is greater than the inclination of the first escape surface 13A. As a result, the widths of the groove portions 14 of the serrations 16 gradually become smaller from the upper surface 12 towards the lower surface 11, and cut off completely in the vicinity of the ridge portions of the first escape surface 13A and the second escape surface 13B

Now, the forms of the cutting edges 17 which present these wavy shapes due to the groove portions 14 and the ridge portions 15 which constitute the serrations 16 will be explained in detail. FIG. 30 is a figure showing the cutting edge 17 which presents a roughly arcuate shape as seen from a direction facing the upper surface 12 in a state of deployment in straight line form. The ridge portions 15 upon the cutting edge 17 are formed as curves of radius of curvature a convex towards the outer periphery of the insert 10c (at the upper portion of FIG. 30), and the groove portions 14 upon the cutting edge 17 are formed as curves of radius of curvature b concave towards the inner side of the insert 10c (at the lower portion of FIG. 30); and the groove portions 14 and ridge portions 15 which are defined by these curves are connected smoothly together, and thereby define the wavy forms of the cutting edges 17. Furthermore, the value of the radius of curvature a of the ridge portions 15 and the value of the radius of curvature b of the groove portions 14 satisfy the relation a>b. Furthermore, the distance h between the summits 15A of the ridge portions 15 and the bottoms 14A of the groove portions 14 in the direction perpendicular to the cutting edge 17 which is formed in a generally arcuate form when seen looking at the upper surface 12, is set in the range from 0.3 mm to 3.0 mm. This distance h is set to be greater than the feed ratio for one edge in the direction perpendicular to the rotational axis O of the tool to which the cutting edge 17 is fitted, when a cutting process is being performed with this insert 10c fitted to a tool main body 20c which will be described hereinafter.

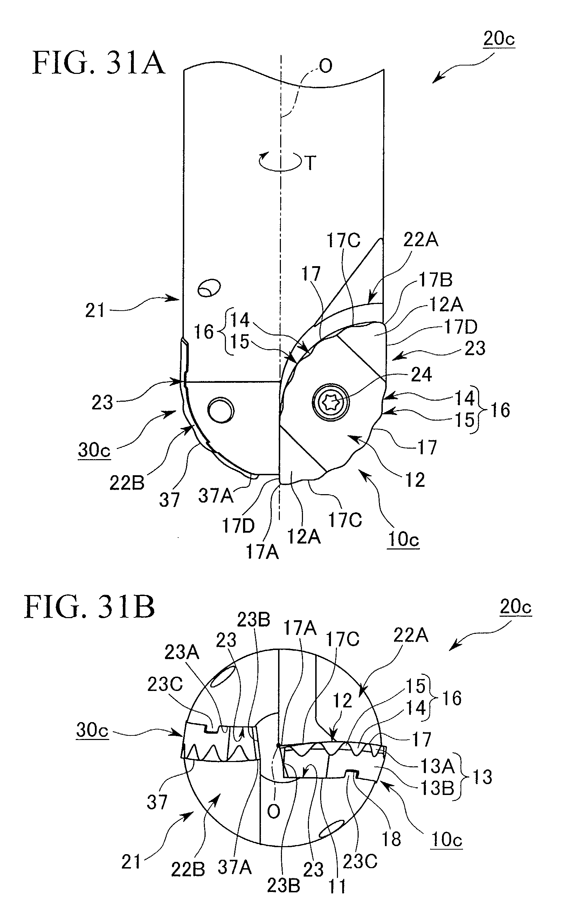

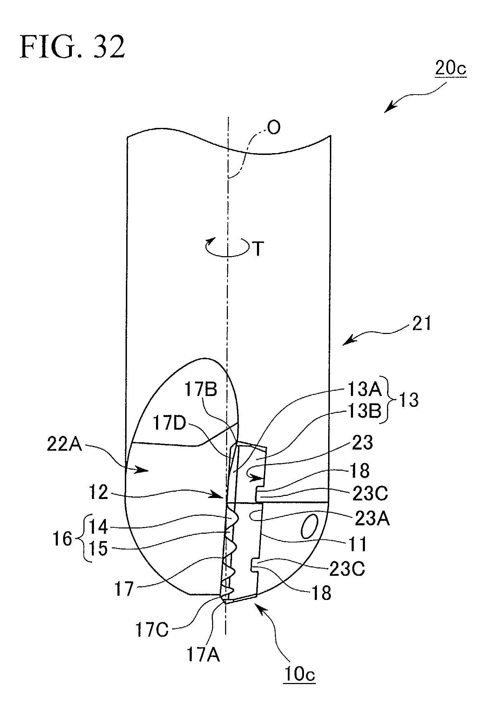

The insert 10c according to this sixth preferred embodiment of the present invention has the structure described above. Next, an indexable ball nose endmill which is equipped with a plurality of these inserts 10c will be explained with reference to FIGS. 31A, 31B, and 32; in the shown example this mill is double edged and is fitted with two such inserts 10c. FIG. 31A is a plan view of this indexable endmill to which this insert according to the sixth preferred embodiment of the present invention is fitted; FIG. 31B is an end on view thereof; and FIG. 32 is a side view thereof.

This indexable ball nose endmill has the same structure as the indexable ball nose endmill tool described with reference to the first preferred embodiment of the present invention. In other words, a tool main body 20c is shaped as a cylinder which is rotated about its central rotational axis O, and a tip portion 21 of this tool main body 20c is shaped roughly as a hemisphere; and a pair of tip pockets 22A and 22B are formed upon this tip portion 21 as perpendicular cutaways as seen from the tip of the tool main body 20c, lying on opposite sides of its rotational axis O, with each of these tip pockets 22A and 22B being formed with a tip fitting seat 23 upon its wall surface which faces towards the rotational direction T of the tool.

Each of the tip fitting seats 23 is made up from a bottom surface 23A upon which keys 23C are formed, which is defined so as to intersect the outer circumferential surface of the tip portion 21 somewhat stepped backward against the rotational direction T from the wall surfaces of the tip pockets 22A and 22B, and a wall surface 23B which is approximately perpendicular to this bottom surface 23A. Furthermore, the bottom surfaces 23A are formed so as to incline backward against the rotational direction T in the direction of the base end of the tool main body.

This insert 10c of this sixth preferred embodiment is fitted to the tip fitting seat 23 of one of the tip pockets 22A by a clamping screw 24 which is passed through its through hole 19, so that its upper surface 12 faces in the forward rotational direction T, with the corner portion 17A of the leading end of one of its cutting edges 17 being positioned upon the rotational axis O, and with the side surface 13 which connects to its other cutting edge 17 being contacted against the wall surface 23B; and, from here, this one cutting edge 17 is arranged so as to extend to the outer circumference of the tool main body towards its base end, and moreover, the locus defined by this one of the cutting edges 17 as it rotates around the rotational axis O is roughly hemispherical. Furthermore, the keys 23C which are formed upon the bottom surface 23A of the tip fitting seat 23 are engaged with key grooves 18 which are formed upon the lower surface 11 of the insert 10c, and slippage of the insert 10c is prevented by this engagement.

At this time, the insert 10c is fitted to the tip fitting seat 23 so that the groove portions 14 and the ridge portions 15 of the serrations 16 which are formed upon the first escape surface 13A which connects to its one cutting edge 17 extend in roughly the same direction as the rotational direction T of the tool. Furthermore, the first sloping cutting edge 17C of the cutting edge 17 is set so that its axial rake angle is negative.

Furthermore, the insert 30c which is fitted to the tip fitting seat 23 of the other tip pocket 22B is formed to be of roughly the same shape as the insert 10c of this sixth preferred embodiment, but somewhat smaller. With this insert 30c, as shown in FIGS. 31A and 31B, the corner portion 37A of the leading end of its cutting edge 37 is somewhat further positioned towards the outer circumference of the tool main body than the corner portion 17 of the leading end of the cutting edge 17 of the insert 10c of this sixth preferred embodiment, and its cutting edge 37 extends out to the outer circumference of the tool main body towards its base end, so that the locus defined by this cutting edge 37 as it rotates around the rotational axis O is positioned to overlap the locus defined by the cutting edge 17 of the insert 10c of the sixth preferred embodiment.

At this time, the position which the rotational trajectory around the rotational axis O of each of the groove portions 14 upon the cutting edge 17 of the insert 10c passes through is the same as the position which the rotational trajectory around the rotational axis O of each of the ridge portions 15 upon the cutting edge 37 of the insert 30c passes through, and moreover the position which the rotational trajectory around the rotational axis O of each of the ridge portions 15 upon the cutting edge 17 of the insert 10c passes through is the same as the position which the rotational trajectory around the rotational axis O of each of the groove portions 14 upon the cutting edge 37 of the insert 30c passes through.

Thus, upon the surface of the work material which has been cut by the cutting edge 17 of the insert 10c which has this gentle wavy surface, a processed surface is formed which has the same gentle wavy shape made up from groove portions and ridge portions, but since the inserts 10c and 30c are fitted in the positions as described above, the ridge portions which remain upon the processed surface of the work material after cutting by the insert 10c come to be cut, during cutting by the insert 30c, by the ridge portions 15 of the cutting edge 37 of the insert 30c. As a result, the surface roughness of the processed surface of the work material is not reduced.

By forming upon the first escape surface 17A the serrations 16 which are made up from the plurality of groove portions 14 and ridge portions 15, this insert 10c according to the sixth preferred embodiment of the present invention, having the structure as described above, is able to pare the chip away closely, because it is thus provided with the wavy shaped cutting edge 17, and due to the wavy shape of this cutting edge 17. Moreover, this same wavy shape is maintained over almost the entire length of the cutting edge 17, since the shape of the cutting edge 17 is defined by the intersection thereof with the groove portions 14 and the ridge portions 15 which are formed upon the first escape surface 13A. Accordingly, in a case such as when performing the cutting process in various cutting directions, even if only a single portion of the cutting edge 17 is being utilized for the cut, this portion of the cutting edge 17 which is serving for this cut necessarily is formed in a wavy shape; and a result it is possible to pare away the chip in a stable manner, and the pared away chip is steadily rejected in a suitable fashion.

Yet further, a result of the fact that the groove portions 14 and the ridge portions 15 of the serrations 16 are defined by curved surfaces is that the strength of the cutting edges 17 is ensured by this wavy shape being defined, since the cutting edges 17, which are formed at the ridge portion of the upper surface 12 and the first escape surface 13A, also exhibit the wavy shape which is defined by these curved lines.

Moreover, since the serrations 16 are formed so that, when seen in the direction of the first escape surface 13A, the direction P in which the groove portions 14 and the ridge portions 15 extend is inclined with respect to the direction Q perpendicular to the upper surface 12 by an angle whose absolute value is in the range less than or equal to 10°, accordingly, when this insert 10c is fitted to the tool main body, the groove portions 14 and the ridge portions 15 of the serrations 16 are arranged so as to extend roughly in the same direction as the rotational direction T of the tool. As a result, during the cutting process, it becomes possible to keep the groove portions 14 of the serrations 16 securely apart from the work material, so that increase of cutting resistance, such as was caused in the prior art by nicks or the like, is reliably prevented. It should be noted that, if the direction P in which the groove portions 14 and the ridge portions 15 extend is inclined with respect to the direction Q perpendicular to the upper surface 12 by an angle whose absolute value becomes greater than 10°, then it becomes impossible to keep the groove portions 14 of the serrations 16 securely apart from the work material, so that there is a possibility that increase of cutting resistance may occur.

Furthermore, by defining the side surface 13 in the form of a multi-stepped surface made up from the first escape surface 13A and the second escape surface 13B, and by forming the serrations 16 upon this first escape surface 13A, it becomes possible reliably to form the shape of the cutting edge 17, since this cutting edge presents a wavy shape. Also, unnecessary deterioration of the rigidity of the insert 10c is not entailed, since the serrations 16 are formed only upon a portion of the second escape surface 13B.

Moreover, since no serrations 16 are formed upon the second escape surface 13B, therefore the groove portions 14 and the ridge portions 15 also do not intersect upon the lower surface 11 which defines the seating surface which seats against the tip fitting seat 23. Accordingly, the quality of fitting of the insert 10c upon its seat is not deteriorated, and the rigidity of fitting of the insert 10c is sufficiently well ensured.

Yet further, in this sixth preferred embodiment of the present invention, as described above, when the cutting edge 17 which, seen in the direction facing the upper surface 12, is shaped in a roughly arcuate shape, exhibits a straight line form, then along with the groove portions 14 and ridge portions 15 upon the cutting edge 17 being formed as curved lines, the cutting edge 17 is formed into a wavy shape by the groove portions 14 and the ridge portions 15 which define these curvilinear shapes being smoothly connected together. However, by contrast to this, it would also be possible, alternatively, to form straight line portions in the groove portions 14 or in the ridge portions 15.

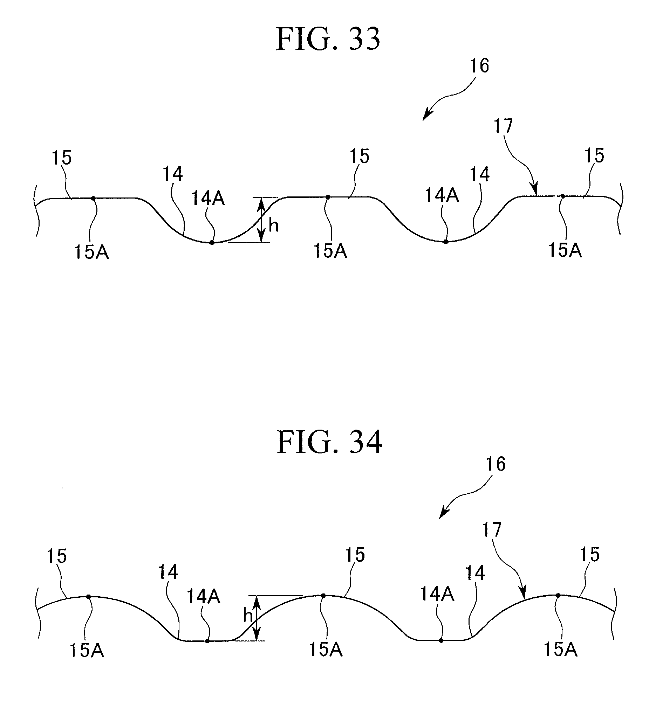

For example, as in a first variant of this sixth preferred embodiment shown in FIG. 33, it would also be possible to form straight line portions (actually defined as curvilinear shapes) in the ridge portions 15 of the cutting edge 17 which included their summits 15A; or, alternatively, as in a second variant of this sixth preferred embodiment shown in FIG. 34, it would also be possible to form straight line portions (likewise actually defined as curvilinear shapes) in the groove portions 14 of the cutting edge 17 which included their bottoms 14A. When this type of structure is employed, it becomes possible to obtain a cutting edge 17 of a wavy shape which has the most desirable characteristics for any hypothesized cutting situation.

It should be understood that, in this type of case, the connections between the portions upon the cutting edges 17 which are formed as straight lines and the portions which are formed as curved lines may also alternatively be connected by smooth curved lines, in consideration of the desirability of endowing of the cutting edges 17 with high strength.

Moreover, it should be understood that the shapes of the serrations 16 are not to be considered as being limited to those explained above with reference to the sixth preferred embodiment; any shapes for these dimpled portions which yield a cutting edge 17 having a wavy shape which is capable of paring away the chip properly will be acceptable. Furthermore, the shape of the insert is not limited to the use of an insert which is roughly shaped in a spindle shape and upon which a pair of cutting edges 17 are formed; it would alternatively be possible to use an insert upon which only a single cutting edge is formed on one side thereof.

## Claims

1. An indexable insert upon which a generally arcuate cutting edge is formed upon a side ridge edge portion of an upper surface which is opposed to a lower surface which constitutes a seating surface of said indexable insert, and which is to be fitted to a tool main body so that the rotational trajectory of said cutting edge traces approximately a portion of a sphere; and wherein said cutting edge is formed in a wavy shape by serrations defined by a plurality of groove portions and ridge portions being formed upon said upper surface and being disposed alternately thereupon.

2. An indexable insert according to claim 1, wherein said groove portions and said ridge portions are formed as curved surfaces.

3. An indexable insert according to claim 1, wherein said groove portions and said ridge portions extend in a direction towards the tip of said tool main body and towards the outer circumference of said tool main body, and in a direction perpendicular to the rotational axis of said tool, so that said serrations are formed so as to incline at an angle in the range of from 30° to 90° with respect to the rotational axis of said tool.

4. An indexable insert according to claim 1, wherein, when said groove portions and said ridge portions are viewed in cross section perpendicular to the direction in which they extend, the distance in the thickness direction of said indexable insert between the bottoms of said groove portions and the summits of said ridge portions is set to be in the range from 0.3 mm to 3.0 mm.

5. An indexable insert according to claim 1, wherein, when said groove portions and said ridge portions are viewed in cross section perpendicular to the direction in which they extend, the distance between the summits of adjacent ones of said ridge portions is set to be in the range from 1.0 mm to 10.0 mm.

6. An indexable insert according to claim 1, wherein, when said groove portions and said ridge portions are viewed in cross section perpendicular to the direction in which they extend, said groove portions and said ridge portions are formed in curvilinear shapes of which the radiuses of curvature are set to be in the range from 1.0 mm to 10.0 mm.

7. An indexable insert according to claim 1, wherein, when said groove portions and said ridge portions are viewed in cross section perpendicular to the direction in which they extend, the absolute value of the angle of inclination which the tangent line to the intersection portion between one said ridge portion and the adjacent one of said groove portions towards a tip of said tool main body subtends with respect to said lower surface, and the absolute value of the angle of inclination which the tangent line to the intersection portion between said ridge portion and the other adjacent one of said groove portions towards a base of said tool main body subtends with respect to said lower surface, are mutually different.

8. An indexable insert according to claim 7, wherein said absolute value of said angle of inclination which said tangent line to said intersection portion between said one ridge portion and said adjacent one of said groove portions towards the tip of said tool main body subtends with respect to said lower surface, is greater than said absolute value of said angle of inclination which said tangent line to said intersection portion between said ridge portion and said other adjacent one of said groove portions towards the base of said tool main body subtends with respect to said lower surface.

9. An indexable insert according to claim 1, wherein the intersection portions between said groove portions and said ridge portions are formed as planar surfaces.

10. An indexable insert according to claim 1, wherein sloping surfaces are formed upon said upper surface along the tip portions of said cutting edges and slope so as to approach gradually closer to said lower surface as the leading end of said cutting edge is approached, and said serrations are formed upon said entire upper surface with the exception of said sloping surfaces.

11. An indexable insert upon which a generally arcuate cutting edge is formed upon a side ridge edge portion of an upper surface which is opposed to a lower surface which constitutes a seating surface of said indexable insert, and which is to be fitted to a tool main body so that the rotational trajectory of said cutting edge traces approximately a portion of a sphere; and wherein said cutting edge is formed in a wavy shape by serrations defined by a plurality of groove portions and ridge portions being formed upon said upper surface and being disposed alternately thereupon, with said groove portions and said ridge portions extending in directions perpendicular to said cutting edge and intersecting said cutting edge.

12. An indexable insert according to claim 11, wherein said groove portions and said ridge portions are formed as curved surfaces.

13. An indexable insert according to claim 11, wherein said groove portions and said ridge portions incline so as to approach towards said lower surface, or so as to retreat from said lower surface, along with increasing distance from said cutting edge.

14. An indexable insert according to claim 11, wherein, when said groove portions and said ridge portions are viewed in cross section perpendicular to the direction in which they extend, the distance in the thickness direction of said indexable insert between the bottoms of said groove portions and the summits of said ridge portions is set to be in the range from 0.3 mm to 3.0 mm.

15. An indexable insert according to claim 11, wherein, when said groove portions and said ridge portions are viewed in cross section perpendicular to the direction in which they extend, the distance between the summits of adjacent ones of said ridge portions is set to be in the range from 1.0 mm to 10.0 mm.

16. An indexable insert according to claim 11, wherein, when said groove portions and said ridge portions are viewed in cross section perpendicular to the direction in which they extend, said groove portions and said ridge portions are formed in curvilinear shapes of which the radiuses of curvature are set to be in the range from 1.0 mm to 10.0 mm.

17. An indexable insert according to claim 11, wherein, when said groove portions and said ridge portions are viewed in cross section perpendicular to the direction in which they extend, the absolute value of the angle of inclination which the tangent line to the intersection portion between one said ridge portion and the adjacent one of said groove portions towards a tip of said tool main body subtends with respect to said lower surface, and the absolute value of the angle of inclination which the tangent line to the intersection portion between said ridge portion and the other adjacent one of said groove portions towards a base of said tool main body subtends with respect to said lower surface, are mutually different.

18. An indexable insert according to claim 17, wherein said absolute value of said angle of inclination which said tangent line to said intersection portion between said one ridge portion and said adjacent one of said groove portions towards the tip of said tool main body subtends with respect to said lower surface, is greater than said absolute value of said angle of inclination which said tangent line to said intersection portion between said ridge portion and said other adjacent one of said groove portions towards the base of said tool main body subtends with respect to said lower surface.

19. An indexable insert according to claim 11, wherein the intersection portions between said groove portions and said ridge portions are formed as planar surfaces.

20. An indexable insert according to claim 11, wherein sloping surfaces are formed upon said upper surface along the tip portions of said cutting edges and slope so as to approach gradually closer to said lower surface as the leading end of said cutting edge is approached, and said serrations are formed upon said entire upper surface with the exception of said sloping surfaces.

21. An indexable insert upon which a generally arcuate cutting edge is formed upon a side ridge edge portion of an upper surface which is opposed to a lower surface which constitutes a seating surface of said indexable insert, and which is to be fitted to a tool main body so that the rotational trajectory of said cutting edge traces approximately a portion of a sphere; and wherein said cutting edge is formed in a wavy shape made up from a plurality of groove portions and ridge portions by a plurality of dimpled portions which are formed upon said upper surface so as to intersect said cutting edge.

22. An indexable insert according to claim 21, wherein said dimpled portions are made as smooth surfaces, and said dimpled portions are mutually connected together by smooth surfaces.

23. An indexable insert according to claim 21, wherein, when said groove portions and said ridge portions are viewed in cross section perpendicular to the direction in which they extend, the distance in the thickness direction of said indexable insert between the bottoms of said groove portions and the summits of said ridge portions is set to be in the range from 0.3 mm to 3.0 mm.

24. An indexable insert according to claim 21, wherein, when said groove portions and said ridge portions are viewed in cross section perpendicular to the direction in which they extend, the distance between the summits of adjacent ones of said ridge portions is set to be in the range from 1.0 mm to 10.0 mm.

25. An indexable insert according to claim 21, wherein, when said groove portions and said ridge portions are viewed in cross section perpendicular to the direction in which they extend, said groove portions and said ridge portions are formed in curvilinear shapes of which the radiuses of curvature are set to be in the range from 1.0 mm to 10.0 mm.

26. An indexable insert according to claim 21, wherein, when said groove portions and said ridge portions are viewed in cross section perpendicular to the direction in which they extend, the absolute value of the angle of inclination which the tangent line to the intersection portion between one said ridge portion and the adjacent one of said groove portions towards a tip of said tool main body upon said cutting edge subtends with respect to said lower surface, and the absolute value of the angle of inclination which the tangent line to the intersection portion between said ridge portion and the other adjacent one of said groove portions towards a base of said tool main body upon said cutting edge subtends with respect to said lower surface, are mutually different.

27. An indexable insert according to claim 26, wherein said absolute value of said angle of inclination which said tangent line to said intersection portion between said one ridge portion and said adjacent one of said groove portions towards the tip of said tool main body upon said cutting edge subtends with respect to said lower surface, is greater than said absolute value of said angle of inclination which said tangent line to said intersection portion between said ridge portion and said other adjacent one of said groove portions towards the base of said tool main body upon said cutting edge subtends with respect to said lower surface.

28. An indexable insert according to claim 21, wherein the intersection portions between said groove portions and said ridge portions are formed as straight lines.

29. An indexable insert according to claim 21, wherein sloping surfaces are formed upon said upper surface along the tip portions of said cutting edges and slope so as to approach gradually closer to said lower surface as the leading ends of said cutting edges are approached, and said dimpled portions are formed upon said entire upper surface with the exception of said sloping surfaces.

30. An indexable insert upon which a generally arcuate cutting edge is formed upon a ridge edge portion between an upper surface which is opposed to a lower surface which constitutes a seating surface of said indexable insert and a side surface, and which is to be fitted to a tool main body so that the rotational trajectory of said cutting edge traces approximately a portion of a sphere; and wherein said cutting edge is formed in a wavy shape by serrations defined by a plurality of groove portions and ridge portions being formed upon said side surface and being disposed alternately thereupon.

31. An indexable insert according to claim 30, wherein said groove portions and said ridge portions are formed as curved surfaces.

32. An indexable insert according to claim 30, wherein, when said serrations are seen facing said side surface, said serrations are formed so that said groove portions and said ridge portions extend in a direction which is inclined at an angle whose absolute value is less than or equal to 10° with respect to the direction which is perpendicular to said upper surface.

33. An indexable insert according to claim 30, wherein said side surface is formed in a multi-stepped shape made up from a plurality of surfaces, and wherein said serrations are formed upon that one of said plurality of surfaces which connects to said cutting edge.
